# EUROPÄISCHE PATENTSCHRIFT

(11) **EP 3 386 781 B1**
(45) Veröffentlichungstag und Bekanntmachung des Hinweises auf die Patenterteilung: **25.03.2020**
(21) Anmeldenummer: 16802114.5
(22) Anmeldetag: 30.11.2016
(51) Int. Cl.: B60G 17/02, B60G 17/033, B60G 15/06, B60G 17/015

(54) **VORRICHTUNG ZUR HÖHENVERSTELLUNG EINER RADAUFHÄNGUNG EINES FAHRZEUGS**
DEVICE FOR HEIGHT ADJUSTMENT OF A WHEEL SUSPENSION OF A VEHICLE
DISPOSITIF DE RÉGLAGE EN HAUTEUR D'UNE SUSPENSION DE ROUE D'UN VÉHICULE

(30) Priorität: 08.12.2015 DE 102015224527
(43) Veröffentlichungstag der Anmeldung: 17.10.2018
(73) Patentinhaber: Bayerische Motoren Werke Aktiengesellschaft, 80809 München (DE)
(72) Erfinder: SCHMIDT, Roland, 82131 Stockdorf (DE)
(86) Internationale Anmeldenummer: PCT/EP2016/079314
(87) Internationale Veröffentlichungsnummer: WO 2017/097655

(56) Entgegenhaltungen:
- EP-A1- 1 681 188
- DE-A1-102006 032 178
- DE-A1-102007 060 422
- DE-A1-102009 047 100
- DE-A1-102010 017 352
- JP-A- 2001 088 527
- US-B1- 8 702 075

## Beschreibung

Die Erfindung betrifft eine Vorrichtung zur Höhenverstellung einer Radaufhängung eines Fahrzeugs, insbesondere zur Höhenverstellung einer Radaufhängung eines zweispurigen Kraftfahrzeugs, sowie ein Fahrzeug mit einer solchen Vorrichtung, wobei die Radaufhängung eine zwischen zwei Federtellern eingespannte Hauptfeder aufweist, wobei wenigstens einer der Federteller in Federlängsrichtung verstellbar ist, und wobei die Vorrichtung zur Verstellung des verstellbaren Federtellers in Federlängsrichtung ausgebildet ist. Ferner betrifft die Erfindung ein Federbein für eine Radaufhängung eines Fahrzeugs, insbesondere für eine Radaufhängung eines zweispurigen Kraftfahrzeugs, wobei das Federbein eine zwischen zwei Federtellern eingespannte Hauptfeder und einen Dämpfer mit einem Dämpferrohr und eine Vorrichtung zur Höhenverstellung aufweist, wobei wenigstens einer der Federteller des Federbeins in Federlängsrichtung verstellbar ist und die Vorrichtung zur Verstellung des verstellbaren Federtellers in Federlängsrichtung ausgebildet ist.

Vorrichtungen zur Höhenverstellung einer Radaufhängung eines Fahrzeugs dienen üblicherweise dazu, eine Ausgangslage eines Rades, die das Rad in einem Fahrzeugstillstand in Geradausstellung der Räder bei einer definierten Referenzbeladung relativ zur Fahrzeugkarosserie in vertikaler Richtung einnimmt, zu verstellen, insbesondere zur Einstellung eines gewünschten, definierten Höhenstandes, wobei der Höhenstand ein Maß dafür ist, wie weit das einzelne Rad im Fahrzeugstillstand in Geradausstellung bei dem definierten Beladungszustand ein- oder ausgefedert ist.

Gattungsgemäße Vorrichtungen zur Höhenverstellung von Radaufhängungen mit einem Federbein, bei denen die Höhenverstellung bewirkt werden kann, indem wenigstens einer der Federteller des Federbeins in Federlängsrichtung verstellt wird, sind aus dem Stand der Technik grundsätzlich bekannt, wobei viele unterschiedliche Konzepte zur Realisierung derartiger Vorrichtungen existieren.

Aus der DE 10 2008 029 048 A1 ist beispielsweise eine gattungsgemäße Vorrichtung zur Höhenverstellung bekannt, bei welcher der in axialer Richtung verschiebbar gelagerter Federteller über stabförmige, an beiden Enden gelenkig gelagerte Koppelemente in Federlängsrichtung verstellt werden kann.

In der DE 10 2006 001 708 B4 ist eine entsprechende Vorrichtung zur Höhenverstellung offenbart, welche zwei axial verschiebbar gelagerte, aber gegen ein Verdrehen gesicherte Hubscheiben aufweist, zwischen denen eine über mehrere Wälzkörper drehbar gelagerte Zwischenscheibe angeordnet ist, die rampenförmige Laufbahnen für die Wälzkörper aufweist, so dass durch ein Verdrehen der Zwischenscheibe und dem dadurch bedingten Abrollen der Wälzkörper auf den jeweils zugeordneten rampenförmigen Laufbahnen die beiden Hubscheiben eine, in axialer Richtung betrachtet, entgegengesetzt gerichtete Bewegung ausführen und so eine Veränderung des Höhenstands bewirken.

Aus der DE 10 2007 004 747 B4 ist eine Vorrichtung zur Höhenverstellung bekannt, welche ein am Dämpferrohr in sich drehbar und axial fest gelagertes Hülsenelement aufweist, das bei einer Betätigung der Verstellvorrichtung eine koaxial zum Hülsenelement angeordnete Außenhülse derart verlagert, dass der in Federlängsrichtung verschiebbare Federteller verlagert wird und somit eine Höhenstandsänderung bewirkt wird.

Aus der DE 10 2007 060 422 A1 ist eine entsprechende Vorrichtung bekannt, bei welcher die Höhenstandsänderung mittels eines Stelltriebs bewirkbar ist, der eine drehbar um den Dämpfer gelagerte Stellspindel und eine mit dem verschiebbaren Federteller verbundene Stellmutter aufweist.

Des Weiteren ist bekannt, die Höhenverstellung mittels einer Kulissenführung zu realisieren, beispielsweise aus der DE 10 2010 017 352 A1, wobei die in dieser Druckschrift beschriebene Kulissenführung mehrere helikale Führungsbahnen aufweist, in denen jeweils ein Kulissenelement geführt aufgenommen ist.

Des Weiteren ist beispielsweise aus der DE 10 2009 058 026 A1 bekannt, zur Höhenverstellung von Radaufhängen, insbesondere zur Verlagerung des axial verschiebbar gelagerten Federtellers, Linearführungen vorzusehen.

Des Weiteren ist bekannt, beispielsweise aus der DE 10 2009 058 027 A1, den axial verschiebbar gelagerten Federteller mithilfe eines hydraulischen oder pneumatischen Mediums in Längsrichtung zu verlagern, d.h. mittels eines hydraulischen oder pneumatischen Aktuators.

Außerdem stellt die DE 10 2006 032 178 A1, die den Oberbegriff des Anspruchs 1 offenbart, eine Höhenvorrichtung zur Höhenverstellung des Aufbaus eines Kraftfahrzeugs bereit, die einen technisch einfachen Hubantrieb bei kompakter Ausführung der Vorrichtung ermöglicht, mittels eines Federbandgetriebes, dessen Drehantrieb in einem Ringraum zwischen einem radial inneren Bauteil und einem radial äußeren Bauteil angeordnet ist, wobei das radial innere Bauteil als eine Statorhülse einen Stator des Drehantriebs des Federbandgetriebes trägt und radial außerhalb des Stators ein Rotor angeordnet ist, der mittels des Stators drehbetätigt ist und in Eingriff mit einem schraubenfederartigen Federband steht, das drehfest mit dem radial äußeren Bauteil verbunden ist.

Aufgabe der vorliegenden Erfindung ist es eine alternative Vorrichtung zur Höhenverstellung einer Radaufhängung eines Fahrzeugs bereitzustellen, vorzugsweise eine möglichst bauraumsparende Vorrichtung, insbesondere eine außerdem einfach aufgebaute und kostengünstige Vorrichtung.

Gelöst wird diese Aufgabe durch eine Vorrichtung mit den Merkmalen von Anspruch 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Manche der nachfolgenden genannten Merkmale werden, um Wiederholungen zu vermeiden, teilweise nur einmal beschrieben, d.h. nur im Zusammenhang mit einer erfindungsgemäßen Vorrichtung, einem erfindungsgemäßen Federbein oder einem erfindungsgemäßen Fahrzeug, gelten jedoch unabhängig davon sowohl für die Vorrichtung, das Federbein als auch für das Fahrzeug.

Eine erfindungsgemäße Vorrichtung zur Höhenverstellung einer Radaufhängung, die eine Stützringscheibe und wenigstens eine als Schraubenfeder ausgebildete Verstellfeder mit einer Anfangswindung, einer Endwindung und wenigstens einer mittleren Windung dazwischen aufweist, wobei die Stützringscheibe auf einer Seite eine Stützfläche aufweist mit wenigstens einer Öffnung in der Stützfläche, und wobei die Verstellfeder derart durch die Öffnung in der Stützringscheibe hindurchgeführt ist, dass sich ein erster Federabschnitt der Verstellfeder mit wenigstens der Anfangswindung auf einer Seite der Stützfläche von der Stützringscheibe befindet und ein zweiter Federabschnitt der Verstellfeder mit wenigstens der Endwindung auf der von der Stützfläche abgewandten Seite und die Stützringscheibe auf einer, bezogen auf einen funktionsgemäßen Einbauzustand der Vorrichtung in einer Radaufhängung eines Fahrzeugs, von der Hauptfeder abgewandten Seite des verstellbaren Federtellers drehbar und in axialer Richtung fest lagerbar ist und sich die Verstellfeder mit einer der Stützfläche zugewandten Seite der Anfangswindung oder einer der mittleren Windungen zumindest teilweise an der Stützfläche der Stützringscheibe abstützt, ist dadurch gekennzeichnet, dass die Vorrichtung ein auf der von der Stützfläche abgewandten Seite der Stützringscheibe angeordnetes Axiallager aufweist, wobei die Stützringscheibe vorzugsweise über das Axiallager in axialer Richtung abstützbar ist.

Das Axiallager ermöglicht, dass die Stützringscheibe in einem funktionsgemäßen Einbauzustand in einem Federbein bzw. in einer Radaufhängung eines Kraftfahrzeugs zum einen in axialer Richtung abgestützt werden kann, zum anderen aber drehbar gelagert werden kann. Das Axiallager ist dabei bevorzugt ein Wälzlager mit mehreren Wälzkörpern, die vorzugsweise in Umfangsrichtung gleichmäßig verteilt angeordnet sind.

Die "Verstellfeder" muss dabei keine federnden Eigenschaften haben, sondern kann auch durch ein ähnlich einer Flachdrahtfeder gewickeltes Band ohne federnde Eigenschaften gebildet sein. Wichtig ist lediglich, dass das Material der "Verstellfeder" zum einen eine gewisse Elastizität aufweist, um problemlos durch die Öffnung in der Stützringscheibe geführt zu werden, zum anderen muss die "Verstellfeder" für eine definierte Höhenstandsänderung eine definierte Blockbildung ermöglichen.

Das heißt, eine erfindungsgemäße Vorrichtung weist einen Verstellmechanismus mit einer Stützringscheibe und einer "Verstellfeder" nach Art einer Schraubenfeder oder einer Flachdrahtfeder auf, wobei die Stützringscheibe eine Stützfläche mit einer Öffnung darin aufweist, durch welche die Verstellfeder hindurchgewickelt ist. Dabei befinden sich die Anfangswindung und eine oder mehrere der mittleren Windungen der Verstellfeder auf der Seite der Stützringscheibe mit der Stützfläche und die Endwindung und eine oder mehrere mittlere Windungen der Verstellfeder auf der andere Seite der Stützringscheibe, wobei die Windungen, die sich auf der Seite der Stützringscheibe mit der Stützfläche befinden, den ersten Federabschnitt bilden und die Windungen der Verstellfeder, die sich auf der anderen Seite der Stützringscheibe befinden, den zweiten Federabschnitt.

Der durch die Stützringscheibe und die Verstellfeder gebildete Verstellmechanismus einer erfindungsgemäßen Vorrichtung ermöglicht die Bereitstellung einer mechanisch relativ einfachen und besonders bauraumsparenden Vorrichtung zur Höhenverstellung für eine Radaufhängung. Durch den einfachen Aufbau des Verstellmechanismus kann eine erfindungsgemäße Vorrichtung relativ kostengünstig realisiert werden im Gegensatz zu den aus dem Stand der Technik bekannten Konzepten, welche beispielsweise einen kostenintensiven Spindelantrieb oder ein oder mehrere ebenfalls kostenintensive Linearführungen oder kinematisch aufwändige, stabförmige Koppelelemente erfordern.

Ein weiterer Vorteil einer erfindungsgemäßen Vorrichtung zur Höhenverstellung ist, dass sie sehr robust ist und außerdem mit wenig Aufwand bei herkömmlichen Radaufhängungen nachrüstbar ist, so dass sie auch als zusätzliche Sonderausstattung angeboten werden kann.

Des Weiteren lässt sich mit einer erfindungsgemäßen Vorrichtung zur Höhenverstellung ohne großen Aufwand eine hohe Variantenvielfalt realisieren, da im Wesentlichen nur der axial verschiebbare Federteller sowie die Verstellfeder angepasst werden müssen, wobei in Bezug auf die Verstellfeder in vielen Fällen lediglich eine Anpassung einer Dicke der Windungen bzw. eine Anpassung der Dicke des Bandes erforderlich ist, um eine gewünschte Übersetzung, das heißt. einen gewünschten Verstellhub pro einer Umdrehung der Stützringscheibe, der Verstellvorrichtung einzustellen.

Eine erfindungsgemäße Vorrichtung zur Höhenverstellung einer Radaufhängung eignet sich dabei insbesondere für Radaufhängungen, die als Einzelradaufhängungen ausgebildet sind, insbesondere für Radaufhängungen zweispuriger Kraftfahrzeuge, wobei vorzugsweise in einem Fahrzeug, insbesondere in einem zweispurigen Kraftfahrzeug, sämtliche Radaufhängungen einer Achse, besonders bevorzugt die Radaufhängungen sämtlicher Achsen, jeweils eine entsprechende, erfindungsgemäße Vorrichtung aufweisen.

Bevorzugt bildet dabei die Hauptfeder einer Radaufhängung, für die eine erfindungsgemäße Vorrichtung zur Höhenverstellung vorgesehen ist und die zwischen den zwei Federtellern eingespannt ist, von denen einer in Federlängsrichtung verstellbar ist, eine Tragfeder der Radaufhängung. Die verstellbare Feder kann aber auch eine sogenannte Zusatzfeder sein, welche üblicherweise parallel zur Tragfeder wirkend in einer Radaufhängung angeordnet ist, um eine progressive Gesamtfederrate erreichen zu können.

Bevorzugt ist die Hauptfeder eine Schraubenfeder, insbesondere eine zylindrische Schraubenfeder. Die Hauptfeder kann selbstverständlich alternativ als kegelförmige oder tonnenförmige Schraubenfeder ausgestaltet sein.

Die Verstellfeder ist für eine möglichst gute Kraftübertragung vorzugsweise zylindrisch ausgebildet, das heißt bevorzugt eine zylindrische Schraubenfeder. Die Verstellfeder kann aber selbstverständlich ebenfalls alternativ kegelförmig oder tonnenförmig ausgestaltet sein. Bevorzugt ist die Verstellfeder konzentrisch zur Stützringscheibe angeordnet und konzentrisch zu dieser gewickelt.

Vorzugsweise sind die Stützringscheibe und die Verstellfeder relativ zueinander drehbar, insbesondere derart, dass durch eine Relativbewegung der Stützringscheibe relativ zur Verstellfeder in Umfangsrichtung, das heißt durch eine Drehbewegung der Stützringscheibe relativ zur Verstellfeder, die Anzahl der Windungen im ersten Federabschnitt und im zweiten Federabschnitt verändert werden kann und infolgedessen, bei entsprechender Anordnung in einer entsprechend ausgestalteten Radaufhängung, eine Verschiebung des in Federlängsrichtung verstellbaren Federtellers der Radaufhängung bewirkt werden kann.

In der erfindungsgemäßen Vorrichtung ist die Stützringscheibe dazu ausgebildet, auf einer, bezogen auf einen funktionsgemäßen Einbauzustand der Vorrichtung in einer Radaufhängung eines Fahrzeugs, von der Hauptfeder abgewandten Seite des verstellbaren Federtellers drehbar und in axialer Richtung fest gelagert zu werden.

Die erfindungsgemäße Vorrichtung ist dazu ausgebildet, am Dämpferrohr eines Dämpfers angeordnet zu werden, wobei der Stützring vorzugsweise konzentrisch zum Dämpferrohr angeordnet werden kann und insbesondere drehbar, aber in axialer Richtung fest gegenüber dem Dämpferrohr gelagert werden kann.

In einigen Fällen kann es vorteilhaft sein, wenn der in axialer Richtung verstellbare Federteller verdrehfest angebunden ist.

Außerdem stützt sich die Verstellfeder der erfindungsgemäßen Vorrichtung mit einer der Stützfläche zugewandten Seite der Anfangswindung oder einer der mittleren Windungen zumindest teilweise an der Stützfläche der Stützringscheibe ab. Dazu weist die Stützringscheibe vorzugsweise eine sich zumindest teilweise im Wesentlichen in radialer Richtung erstreckende Stützfläche auf.

In einer vorteilhaften Ausgestaltung einer erfindungsgemäßen Vorrichtung ist die Vorrichtung derart ausgebildet und kann derart in einer Radaufhängung angeordnet werden, dass sich in einem funktionsgemäßen Einbauzustand der Vorrichtung in einer Radaufhängung die Verstellfeder mit einer von der Stützfläche abgewandten Seite der Anfangswindung auf der von der Hauptfeder abgewandten Seite des verstellbaren Federtellers in Federlängsrichtung am verstellbaren Federteller abstützt.

Die Verstellfeder kann sich dabei entweder direkt an der Stützfläche der Stützringscheibe und/oder am verstellbaren Federteller abstützen, das heißt unmittelbar und ohne ein weiteres, jeweils dazwischen angeordnetes Bauteil, oder aber über wenigstens ein entsprechendes, zusätzliches Bauteil, das in axialer Kraftflussrichtung zwischen der Verstellfeder und dem verstellbaren Federteller und/oder zwischen der Verstellfeder und der Stützfläche angeordnet ist.

Vorzugsweise stützt sich die Verstellfeder einer erfindungsgemäßen Vorrichtung direkt, das heißt unmittelbar und ohne ein Bauteil dazwischen, an der Stützfläche der Stützringscheibe ab.

Hingegen hat es sich in einigen Anwendungsfällen als vorteilhaft erwiesen, insbesondere wenn die Vorrichtung an einem Dämpfer angeordnet ist, wenn die Verstellfeder indirekt am verstellbaren Federteller abgestützt ist, insbesondere über einen Hilfsfederteller, welcher bevorzugt zur direkten Abstützung am verstellbaren Federteller ausgebildet ist. Das heißt, eine erfindungsgemäße Vorrichtung kann einen Hilfsfederteller aufweisen, der zur direkten Abstützung auf der von der Hauptfeder abgewandten Seite am verstellbaren Federteller ausgebildet ist und an dem sich die Verstellfeder abstützt, insbesondere mit einer von der Stützfläche abgewandten Seite der Anfangswindung.

Ist die Verstellfeder mit ihrer Anfangswindung am verstellbaren Federteller abgestützt, entweder direkt oder indirekt über einen Hilfsfederteller, und mit einer ihrer mittleren Windungen an der Stützfläche und ist die Stützringscheibe in axialer Richtung fest gelagert und liegen die Windungen der Verstellfeder des ersten Federabschnitts auf Block, kann durch eine Drehbewegung der Stützringscheibe aufgrund der damit verbundenen Änderung der Anzahl der Windungen im ersten Federabschnitt unmittelbar eine Änderung der Höhe des ersten Federabschnittes bewirkt werden und infolgedessen eine Änderung des Abstandes zwischen der Stützfläche der Stützringscheibe und der von der Hauptfeder abgewandten Seite des Federtellers und damit eine Höhenverstellung bzw. eine Änderung des Höhenstands.

Je nach Drehrichtung der Stützringscheibe nimmt die Anzahl der Windungen der Verstellfeder im ersten Federabschnitt dabei zu oder ab und der Höhenstand nimmt, je nach Einbaulage der Vorrichtung relativ zum verstellbaren Federteller, entsprechend zu oder ab, wobei eine Verringerung des Abstandes zwischen den beiden Federtellern, zwischen denen die Hauptfeder eingespannt ist, vorzugsweise eine Verringerung des Höhenstandes bewirkt und eine Vergrößerung des Abstandes eine Vergrößerung des Höhenstandes.

Die minimale und die maximale Blockhöhe des ersten Federabschnitts der Verstellfeder definieren dabei die Grenzen eines möglichen Verstellbereichs. Die Änderung des Höhenstandes, die sich jeweils pro einer vollständigen Umdrehung der Stützringscheibe ergibt, entspricht dabei jeweils einer Dicke einer Windung der Verstellfeder bzw. der Dicke des Verstellfederbandes bzw. Verstellfederdrahtes in axialer Richtung, so dass über die Ausgestaltung der Verstellfeder, insbesondere über die gewählte Dicke der einzelnen Windungen der Verstellfeder, die Änderung des Höhenstands pro einer vollständigen Umdrehung der Stützringscheibe eingestellt werden kann und somit innerhalb gewisser Grenzen frei wählbar ist.

In einer weiteren vorteilhaften Ausgestaltung einer erfindungsgemäßen Vorrichtung weist die Verstellfeder einen im Wesentlichen rechteckigen Querschnitt oder einen rechteckigen Querschnitt auf und ist vorzugsweise flach gewickelt. Dadurch kann eine besonders bauraumsparende Ausgestaltung einer erfindungsgemäßen Vorrichtung realisiert werden. Ferner ermöglicht eine Verstellfeder mit einem rechteckigen Querschnitt, die flach gewickelt ist, eine besonders kompakte Blockbildung und dadurch eine besonders gute Kraftübertragung in axialer Richtung, so dass eine auftretende Flächenpressung möglichst klein gehalten werden kann.

In einer weiteren vorteilhaften Ausgestaltung einer erfindungsgemäßen Vorrichtung weist die Vorrichtung einen, auf der von der Stützfläche abgewandten Seite der Stützringscheibe angeordneten Lagerteller zur Aufnahme des Axiallagers auf, wobei der Lagerteller vorzugsweise axial festgelegt werden kann und insbesondere drehfest angebunden werden kann, beispielsweise an einem Dämpferrohr oder an einem radführenden Lenker der Radaufhängung. Dadurch kann in einem funktionsgemäßen Einbauzustand der Vorrichtung in einem Federbein bzw. in einer Radaufhängung eines Kraftfahrzeugs die Stützringscheibe in axialer Richtung über das Axiallager und den Lagerteller abgestützt werden.

Vorzugsweise weist der Lagerteller dabei zur Befestigung einen hülsenförmigen Abschnitt und/oder eine zylindermantelförmige Lagerteller-Gehäusewand auf, wobei es für eine Befestigung des Lagertellers an einem Dämpferrohr vorteilhaft ist, wenn der Lagerteller einen hülsenförmigen Abschnitt aufweist. Zur Befestigung an einem radführenden Lenker ist es hingegen vorteilhaft, wenn der Lagerteller eine Lagerteller-Gehäusewand aufweist.

In einer weiteren vorteilhaften Ausgestaltung einer erfindungsgemäßen Vorrichtung weist die Vorrichtung in einem Bereich des zweiten Federabschnitts der Verstellfeder, das heißt auf der von der Stützfläche abgewandten Seite der Stützringscheibe, ein sich in axialer Richtung erstreckendes, rohrförmiges Gehäuse auf, über welches sich die Stützringscheibe vorzugsweise am Axiallager abstützt, wobei besonders bevorzugt die Stützringscheibe und das Gehäuse als separate Bauteile ausgebildet sind und die Stützringscheibe zur Abstützung am Gehäuse eine Abstützfläche aufweist, wobei die Abstützfläche der Stützringscheibe vorzugsweise eine kugelsegmentförmige Kontur aufweist, und wobei das Gehäuse insbesondere eine zur kugelsegmentförmigen Kontur der Abstützfläche der Stützringscheibe korrespondierend ausgestaltete Aufnahmefläche zur Aufnahme der Stützringscheibe aufweist. Das rohrförmige Gehäuse kann dabei den zweiten Federabschnitt der Verstellfeder vollständig von außen umschließen oder aber auch im Inneren des zweiten Federabschnitts angeordnet sein.

Die kugelsegmentförmige Kontur bzw. Geometrie der Abstützfläche der Stützringscheibe sowie das entsprechend korrespondierend ausgestaltete Gehäuse ermöglichen es, dass sich der Stützring selbsttätig, ohne zusätzliche Maßnahmen derart ausrichtet, dass eine gleichmäßige Kraftverteilung über den Umfang der Stützringscheibe der in axialer Richtung auftretenden Kräfte erreicht wird. Infolge der dadurch reduzierten Flächenpressung kann ein Verschleiß an den Bauteilen, insbesondere im Bereich der Stützfläche, minimiert werden.

Wird eine vorbeschriebene, erfindungsgemäße Vorrichtung in einem Federbein eingesetzt, bei dem die Federlängsachse mit einer Dämpferlängsachse zusammenfällt, richtet sich die Stützringscheibe aufgrund der kugelsegmentförmigen Kontur in der Regel senkrecht zur Federlängsachse aus, so dass auch eine Querkraftbelastung auf die Vorrichtung reduziert wird bzw. in einigen Fällen sogar vollständig vermieden werden kann.

Fallen Federlängsachse und Dämpferlängsachse nicht zusammen, ist es von Vorteil, wenn zusätzliche Maßnahmen zur Reduzierung bzw. Vermeidung von auf die Vorrichtung wirkenden Querkräften vorgesehen sind. Bevorzugt weist die Vorrichtung in diesem Fall eine diesbezüglich entsprechend ausgestaltete Führungseinrichtung zur axialen Führung des verstellbaren Federtellers auf.

Alternativ können die Stützringscheibe und das Gehäuse statt aus separaten Bauteilen aber auch einstückig ausgebildet sein und eine Art Stütztopf bilden, wobei die Stützringscheibe einen Topfboden bildet und das rohrförmige Gehäuse eine Topfwand.

Eine besonders leichte und damit gewichtsparende erfindungsgemäße Vorrichtung kann realisiert werden, wenn die Stützringscheibe und/oder das Gehäuse Kunststoff aufweisen oder daraus bestehen.

In einer weiteren vorteilhaften Ausgestaltung einer erfindungsgemäßen Vorrichtung ist wenigstens eine der Laufflächen des Axiallagers durch die Stützringscheibe und/oder das Gehäuse oder den Lagerteller gebildet, wobei besonders bevorzugt eine Lauffläche des Axiallagers durch das Gehäuse oder die Stützringscheibe gebildet ist und eine Lauffläche des Axiallagers durch den Lagerteller. Dabei ist insbesondere, wenn ein Bauteil eine Lauffläche bildet, das Kunststoff aufweist oder daraus besteht, die Lauffläche durch ein Metallblech, insbesondere durch ein eingelegtes Stahlblech, gebildet. Vorzugsweise ist das Stahlblech dabei spanlos hergestellt und insbesondere ein Stanzteil.

Ist das Axiallager als Wälzlager ausgebildet, sind die Bauteile, welche die Laufflächen bilden, vorzugsweise derart ausgestaltet, dass ein Herausfallen der Wälzkörper verhindert wird, wobei die Bauteile dazu besonders bevorzugt einen entsprechenden Rand aufweisen.

In einer weiteren vorteilhaften Ausgestaltung einer erfindungsgemäßen Vorrichtung weist die Vorrichtung wenigstens eine weitere Verstellfeder auf, wobei vorzugsweise wenigstens eine der weiteren Verstellfedern einen rechteckigen oder im Wesentlichen rechteckigen Querschnitt aufweist und insbesondere flachgewickelt ist. Das heißt mit anderen Worten, dass in einer bevorzugten Ausgestaltung einer erfindungsgemäßen Vorrichtung zusätzlich zu einer ersten Verstellfeder eine weitere Verstellfeder vorgesehen ist, welche besonders bevorzugt wie die erste Verstellfeder ausgestaltet ist.

In einer weiteren vorteilhaften Ausgestaltung einer erfindungsgemäßen Vorrichtung weist die Stützringscheibe neben der ersten Öffnung in der Stützfläche wenigstens eine weitere Öffnung auf, wobei vorzugsweise die erste Verstellfeder durch die erste Öffnung in der Stützringscheibe hindurchgeführt ist und wenigstens eine der weiteren Verstellfedern durch wenigstens eine der weiteren Öffnungen, wobei vorzugsweise durch eine Öffnung jeweils nur eine Verstellfeder hindurchgeführt ist. Dadurch kann eine Erhöhung der Änderung des Höhenstands pro vollständiger Umdrehung der Stützringscheibe um die Dicke der weiteren Verstellfeder erreicht werden bzw. bei der Verwendung zweier identischer Verstellfedern eine Verdopplung der Änderung des Höhenstands.

In einer alternativen, aber ebenfalls möglichen Ausgestaltung einer erfindungsgemäßen Vorrichtung sind die Verstellfedern übereinander gewickelt und übereinanderliegend, das heißt gemeinsam, durch die Öffnung in der Stützringscheibe hindurchgeführt. Dadurch kann die erreichbare Änderung des Höhenstands pro einer vollständigen Umdrehung der Stützringscheibe ebenfalls um die Dicke der Windungen der weiteren Verstellfeder erhöht werden bzw. bei gleicher Ausgestaltung der ersten Verstellfeder und der weiteren Verstellfeder verdoppelt werden. Allerdings muss sichergestellt sein, dass die Verstellfedern eine ausreichende Elastizität aufweisen, um problemlos gemeinsam durch die Öffnung geführt werden zu können.

In einer weiteren vorteilhaften Ausgestaltung einer erfindungsgemäßen Vorrichtung weist eine, bezogen auf einen funktionsgemäßen Einbauzustand der Vorrichtung in einer Radaufhängung, dem verstellbaren Federteller zugewandte Oberfläche wenigstens einer Verstellfeder zumindest teilweise einen derart hohen Reibwert auf, dass eine Relativbewegung zwischen den einzelnen Windungen, insbesondere in radialer Richtung, verhindert wird. Bevorzugt ist der Reibwert dabei derart hoch, dass auch eine Relativbewegung in Umfangsrichtung verhindert wird. Dadurch kann insbesondere ein Reibung erzeugender Kontakt und/oder ein Klemmen der Verstellfeder am rohrförmigen Gehäuse vermieden werden.

In einer weiteren vorteilhaften Ausgestaltung einer erfindungsgemäßen Vorrichtung ist an wenigstens einer der Windungen wenigstens einer Verstellfeder, vorzugsweise an wenigstens einer der mittleren Windungen, ein Vorsprung angeordnet und an wenigstens einer der benachbarten Windungen eine Ausnehmung, wobei der Vorsprung mit der Ausnehmung bei Blockbildung der Verstellfeder derart zusammenwirkt, dass eine Relativbewegung zwischen den einzelnen Windungen verhindert wird, insbesondere in radialer Richtung, wobei vorzugsweise der Vorsprung, bezogen auf einen funktionsgemäßen Einbauzustand der Vorrichtung in einer Radaufhängung, auf der dem verstellbaren Federteller zugewandten Seite der Windung angeordnet ist und die Ausnehmung auf der vom verstellbaren Federteller abgewandten Seite. Bevorzugt bilden der Vorsprung und die Ausnehmung bei Blockbildung dabei eine zumindest in radialer Richtung wirkende formschlüssige Verbindung.

Vorzugsweise erstreckt sich die Ausnehmung dabei über einen großen Teil der Länge der Verstellfeder, vorzugsweise über die gesamte Länge der Verstellfeder, und bildet eine Nut, wobei es besonders vorteilhaft ist, wenn sich der Vorsprung ebenfalls über einen großen Teil der Länge der Verstellfeder erstreckt, insbesondere ebenfalls über die gesamte Länge und eine Art Mittelsteg bildet.

In einer weiteren vorteilhaften Ausgestaltung einer erfindungsgemäßen Vorrichtung ist die Stützfläche und/oder eine der vom verstellbaren Federteller abgewandte Oberfläche wenigstens einer Verstellfeder, bezogen auf einen funktionsgemäßen Einbauzustand der Vorrichtung in einer Radaufhängung, zumindest teilweise mit einem Gleitlagerwerkstoff beschichtet oder besteht daraus. Dadurch kann die Reibung zwischen der Stützfläche und der Verstellfeder erheblich reduziert werden, wodurch wiederum die zur Höhenverstellung erforderlichen Verstellkräfte und die entsprechend erforderliche Antriebsleistung des Aktuators gering gehalten werden können.

In einer weiteren vorteilhaften Ausgestaltung einer erfindungsgemäßen Vorrichtung sind in der Stützringscheibe, vorzugsweise in der Stützfläche, insbesondere in Umfangsrichtung gleichmäßig verteilt, mehrere Wälzkörper angeordnet, wobei vorzugsweise wenigstens einer der Wälzkörper kegelförmig ausgebildet ist, insbesondere alle. Durch die Anordnung von Wälzkörpern in der Stützfläche kann die auftretende Reibung zwischen der Verstellfeder und der Stützfläche und damit zwischen der Verstellfeder und der Stützringscheibe um ein Vielfaches reduziert werden.

Als am besten geeignet haben sich Wälzkörper erwiesen, die als Rollen ausgebildet sind, das heißt zylinderförmige, tonnenförmige oder kegelförmige Wälzkörper. Besonders vorteilhaft sind kegelförmige Wälzkörper, da mittels kegelförmiger Wälzkörper der Längenunterschied der Verstellfeder zwischen der Umfangslänge an der Innenseite und der Umfangslänge an der Außenseite der Verstellfeder ausgeglichen werden kann, so dass eine ansonsten aufgrund der unterschiedlichen Umfangslängen auftretende Relativbewegung zwischen der Verstellfeder und den Wälzkörpern in der Stützfläche vermieden werden kann.

In einer weiteren vorteilhaften Ausgestaltung einer erfindungsgemäßen Vorrichtung ist die Stützfläche helixförmig ausgebildet, vorzugsweise mit einer Steigung, die der Steigung der Verstellfeder entspricht, also gleich der Steigung der Verstellfeder ist, insbesondere der Steigung der sich an der Stützfläche abstützenden Verstellfeder. Das heißt mit anderen Worten, die Stützfläche ist vorzugsweise korrespondierend zur Steigung der Verstellfeder ausgebildet und ebenfalls schraubenförmig ausgestaltet, so dass die Stützfläche parallel zu einer Unterseite der sich an der Stützfläche abstützenden Windung der Verstellfeder verläuft und sich nicht in einer senkrecht zur Drehachse des Stützrings erstreckenden Ebene erstreckt. Die schraubenförmige Ausgestaltung der Stützfläche hat den Vorteil, dass sich die auf die Stützfläche wirkende Flächenpressung reduziert und somit der Verschleiß im Bereich der Stützfläche reduziert werden kann.

Zur Bewegung der Stützringscheibe in Umfangsrichtung weist eine erfindungsgemäße Vorrichtung vorzugsweise ein Aktuator auf, mittels welchem die Stützringscheibe in Umfangsrichtung drehbar ist, insbesondere sowohl links herum als auch rechts herum, wobei der Aktuator vorzugsweise ein Elektromotor ist, der insbesondere elektronisch steuer- und/oder regelbar ist, so dass eine automatische Höhenverstellung möglich ist.

Der Aktuator kann dabei direkt mit der Stützringscheibe gekoppelt sein, beispielsweise über ein Schneckengetriebe, eine Stirnradverzahnung, einen Zugmitteltrieb oder dergleichen oder aber, sofern vorhanden, mit dem Gehäuse, welches in diesem Fall drehfest mit der Stützringscheibe verbunden sein muss. Der Aktuator kann aber auch konzentrisch zur Stützringscheibe ausgebildet sein und beispielsweise mittels einer Hohlverzahnung mit der Stützringscheibe und/oder dem Gehäuse gekoppelt sein. Bevorzugt ist die Steigung der Verstellfeder dabei derart gering gewählt, dass die Vorrichtung selbsthemmend ist.

Zur Abdichtung der Vorrichtung gegen Umwelteinflüsse, insbesondere gegen Schmutz und Feuchtigkeit, weist die Vorrichtung vorzugsweise einen sich zwischen dem in axialer Richtung verstellbaren Federteller und dem Lagerteller erstreckenden Faltenbalg oder eine entsprechende Schiebemuffe mit Dichtung auf, welche diesen Bereich abdichtet. Faltenbalge zur Abdichtung, insbesondere an Federbeinen, sind aus dem Stand der Technik grundsätzlich bekannt.

Ein Federbein mit einer Vorrichtung zur Höhenverstellung ist dadurch gekennzeichnet, dass es eine erfindungsgemäße Vorrichtung zur Höhenverstellung aufweist.

In einer vorteilhaften Ausgestaltung eines Federbeins, das eine erfindungsgemäße Vorrichtung zur Höhenverstellung aufweist, ist die Stützringscheibe der Vorrichtung auf einer von der Hauptfeder des Federbeins abgewandten Seite des verstellbaren Federtellers drehbar und in axialer Richtung fest gegenüber dem Dämpferrohr gelagert, insbesondere drehbar und in axialer Richtung fest am Dämpferrohr befestigt.

In einer besonders vorteilhaften Ausgestaltung eines Federbeins weist die Vorrichtung ein auf der von der Stützfläche abgewandten Seite der Stützringscheibe angeordnetes Axiallager auf, wobei die Stützringscheibe vorzugsweise über das Axiallager am Dämpferrohr in axialer Richtung abgestützt ist.

In einer weiteren, ebenfalls besonders vorteilhaften Ausgestaltung eines Federbeins weist die Vorrichtung einen auf der von der Stützfläche abgewandten Seite der Stützringscheibe angeordneten Lagerteller zur Aufnahme des Axiallagers auf, wobei der Lagerteller vorzugsweise am Dämpferrohr axial festgelegt ist und insbesondere mit dem Dämpferrohr drehfest verbunden ist, insbesondere über einen hülsenförmigen Abschnitt am Lagerteller. Das heißt mit anderen Worten, dass der Lagerteller bevorzugt am Dämpferrohr befestigt ist, wobei der Lagerteller dazu besonders bevorzugt einen hülsenförmigen Abschnitt aufweist.

Vorzugsweise ist bei einem Federbein mit einer erfindungsgemäßen Vorrichtung der Bereich zwischen den beiden Federtellern, zwischen denen die Hauptfeder eingespannt ist, in Längsrichtung sowie zum Dämpferrohr hin abgedichtet, insbesondere mittels eines Faltenbalgs.

Vorzugsweise ist die erfindungsgemäße Vorrichtung, insbesondere wenn die erfindungsgemäße Vorrichtung Teil eines Federbeins ist, bezogen auf ein funktionsgemäßen Einbauzustand der Vorrichtung in einer Radaufhängung eines Fahrzeugs, zumindest teilweise unterhalb der Hauptfeder angeordnet, insbesondere befinden sich wenigstens die Verstellfeder und die Stützringscheibe unterhalb der Hauptfeder. Das heißt bevorzugt ist die Vorrichtung auf einer dem Radträger zugewandten Seite der Hauptfeder angeordnet. Dies kann unter Bauraumaspekten in einigen Fällen besonders vorteilhaft sein.

Alternativ kann die Vorrichtung aber auch wenigstens teilweise oberhalb der Hauptfeder angeordnet sein, das heißt wenigstens teilweise oberhalb eines aufbauseitigen Endes der Hauptfeder, wobei sich vorzugsweise wenigstens die Stützringscheibe und die Verstellfeder oberhalb der Hauptfeder befinden. Bei einem entsprechend großen Innendurchmesser der Hauptfeder ist es aber auch möglich, die erfindungsgemäße Vorrichtung innerhalb der Hauptfeder anzuordnen, vorzugsweise konzentrisch zu dieser, insbesondere unterhalb des aufbauseitigen Federtellers oder oberhalb des radträgerseitigen Federtellers. Dadurch kann ebenfalls eine besonders bauraumsparende Anordnung realisiert werden.

Ein Fahrzeug ist dadurch gekennzeichnet, dass es eine erfindungsgemäße Vorrichtung zur Höhenverstellung aufweist.

In einer vorteilhaften Ausgestaltung eines Fahrzeugs weist das Fahrzeug ein Federbein mit einer zwischen zwei Federtellern eingespannten Hauptfeder und einer erfindungsgemäßen Vorrichtung zur Höhenverstellung auf, wobei wenigstens einer der Federteller mittels der erfindungsgemäßen Vorrichtung in Federlängsrichtung verstellbar ist.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen Ausführungen darstellen können. Im Folgenden wird die Erfindung anhand mehrerer bevorzugter Ausführungsbeispiele weiter erläutert, wobei die Erfindung dazu in den beigefügten Zeichnungen schematisch dargestellt ist.

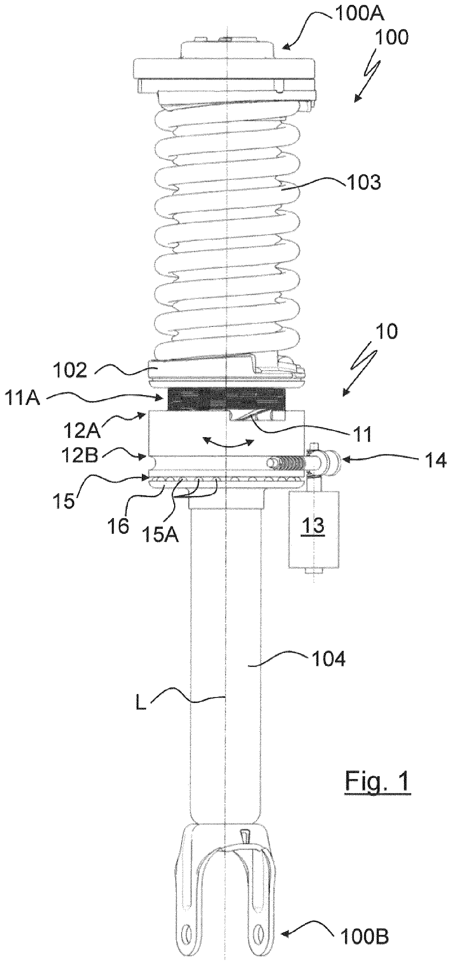

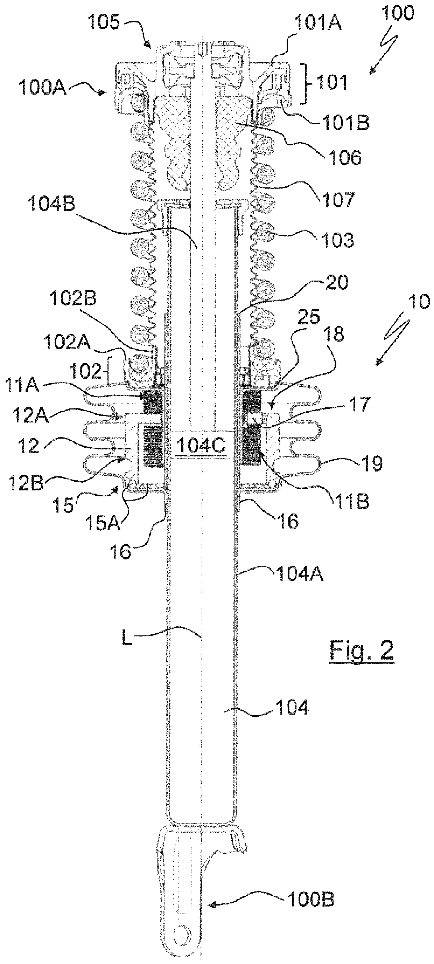

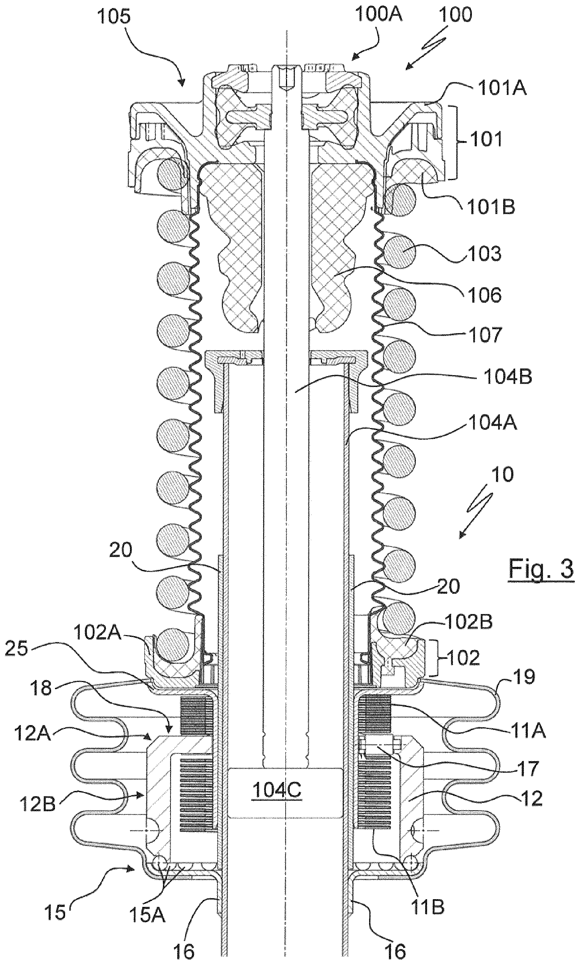

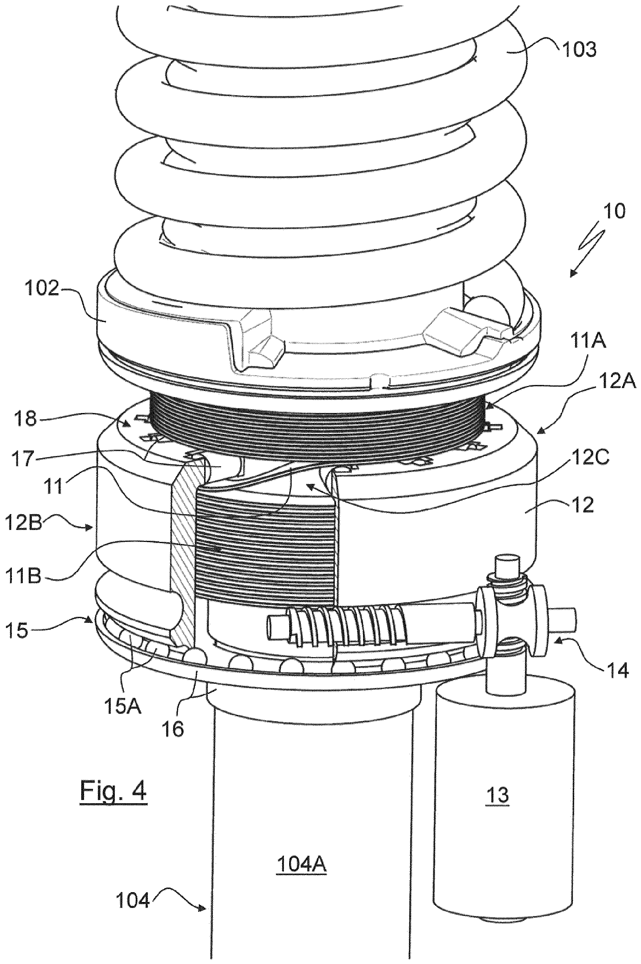

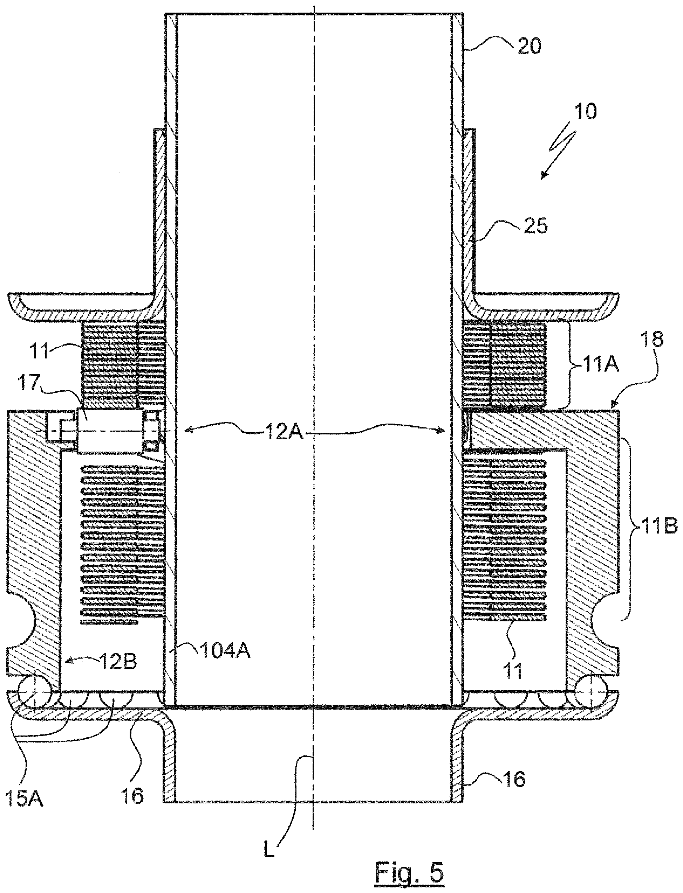

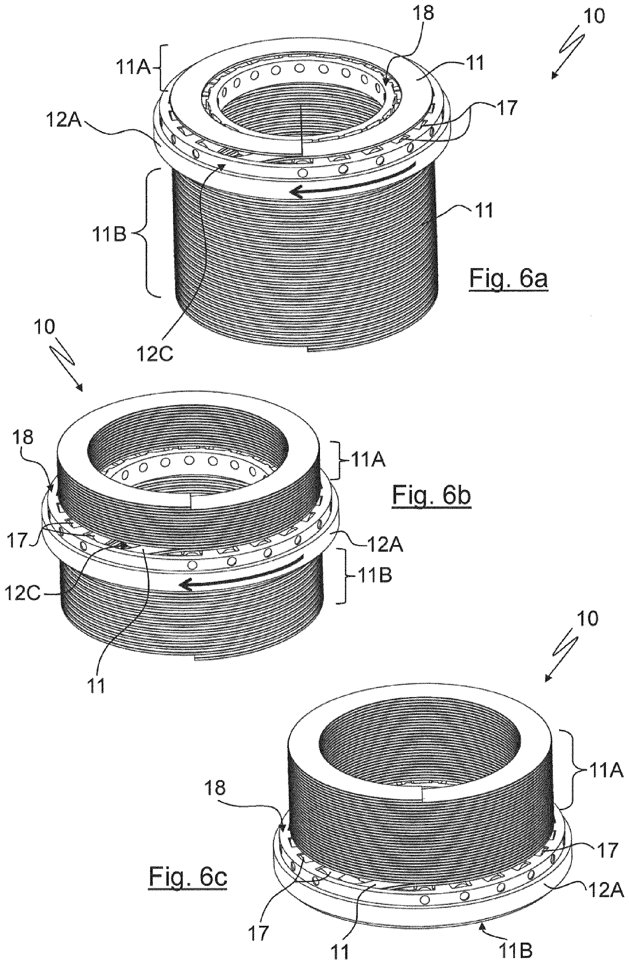

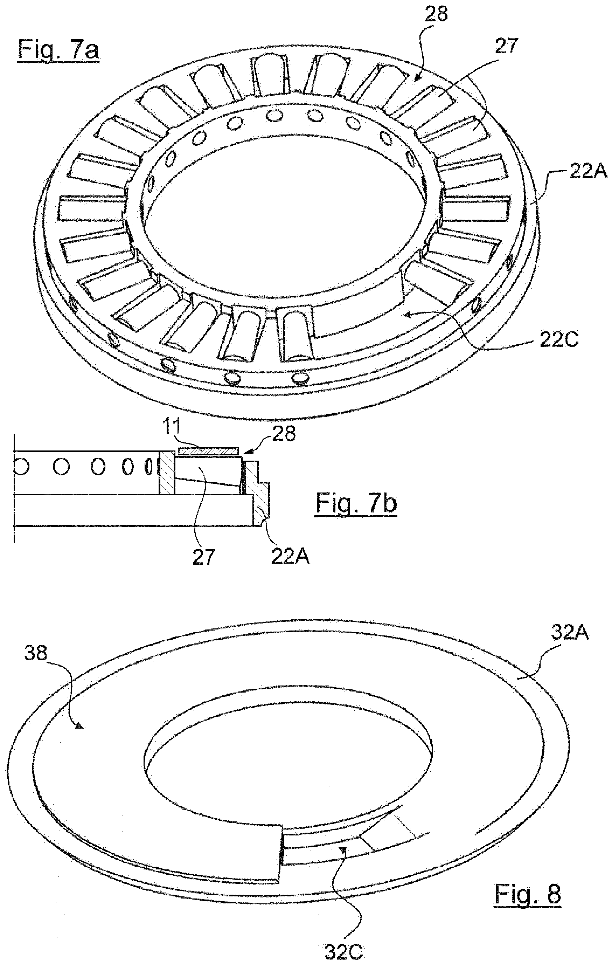

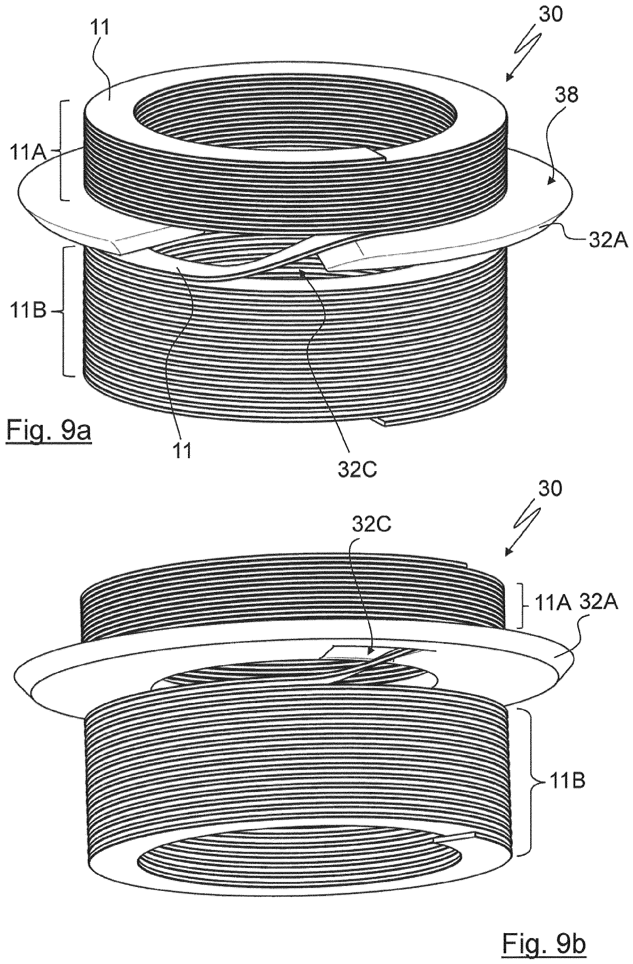

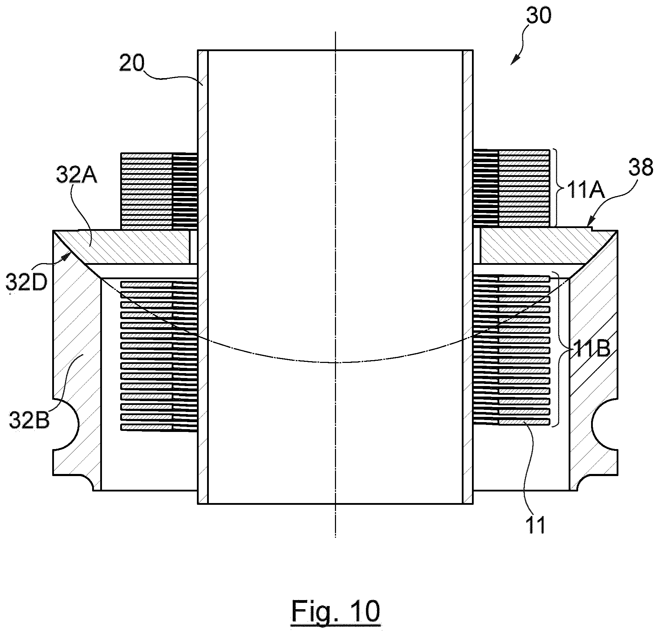

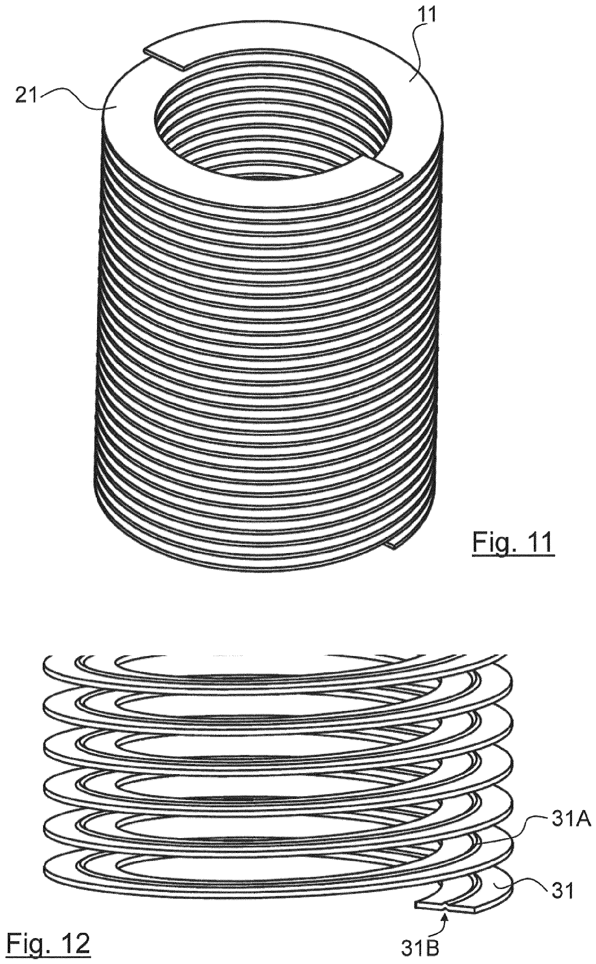

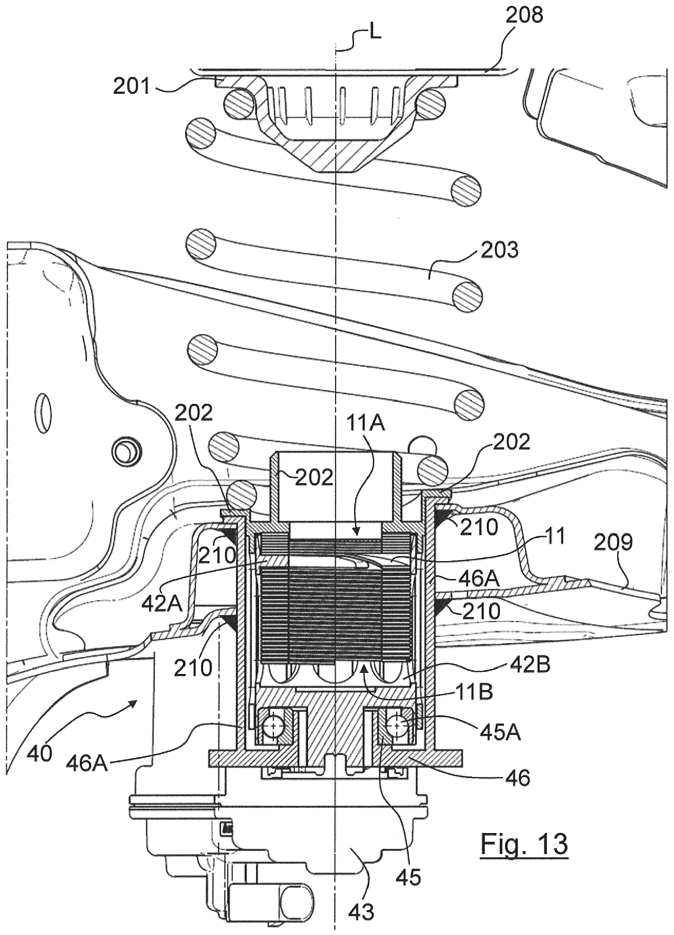

**Fig. 1** zeigt ein Federbein mit einem ersten Ausführungsbeispiel einer erfindungsgemäßen Vorrichtung zur Höhenverstellung in Seitenansicht, **Fig. 2** das Federbein aus Fig. 1 in Schnittdarstellung, **Fig. 3** den oberen Abschnitt des Federbeins aus Fig. 2 in vergrößerter Darstellung, **Fig. 4** einen vergrößerten Ausschnitt des Federbeins aus den Fig. 1 und 2 im Bereich der erfindungsgemäßen Vorrichtung, **Fig. 5** Komponenten der erfindungsgemäßen Vorrichtung in vergrößerter Darstellung im Schnitt, **Fig. 6a** die Stützringscheibe und die Verstellfeder aus den Fig. 1 bis 5 in perspektivischer, vergrößerter Darstellung in einem Zustand zur Einstellung eines minimalen Höhenstandes, **Fig. 6b** die Komponenten aus Fig. 6a in einem Zustand zur Einstellung eines mittleren Höhenstandes, **Fig. 6c** die Komponenten aus den Fig. 6a und 6b in einem Zustand zur Einstellung eines maximalen Höhenstandes, **Fig. 7a** den Stützring aus den vorangegangenen Figuren in perspektivischer Einzelteildarstellung und **Fig. 7b** die Stützringscheibe aus Fig. 7a im Viertelschnitt. **Fig. 8** zeigt ein alternatives Ausführungsbeispiel einer Stützringscheibe für eine erfindungsgemäße Vorrichtung in perspektivischer Einzelteildarstellung, **Fig. 9a** die Stützringscheibe aus Fig. 8 zusammen mit der Verstellfeder in vergrößerter, perspektivischer Darstellung in einem Zustand zur Einstellung eines etwa mittleren Höhenstandes in einer Ansicht von schräg oben und **Fig. 9b** die Komponenten aus Fig. 9a in einer Ansicht von schräg unten. **Fig. 10** zeigt einzelne Komponenten eines alternativen Ausführungsbeispiels einer erfindungsgemäßen Vorrichtung zur Höhenverstellung mit einem dritten Ausführungsbeispiel einer Stützringscheibe, **Fig. 11** ein Ausführungsbeispiel einer Anordnung von zwei Verstellfedern für eine erfindungsgemäße Vorrichtung zur Höhenverstellung, **Fig. 12** ein alternatives Ausführungsbeispiel für die Ausgestaltung einer Verstellfeder und **Fig. 13** in Schnittdarstellung einen Ausschnitt eines im Bereich einer Radaufhängung mit einem alternativen Ausführungsbeispiel einer erfindungsgemäßen Vorrichtung zur Höhenverstellung. Erfindungswesentlich können dabei sämtliche, näher beschriebenen Merkmale sein.

Fig. 1 zeigt ein Federbein 100 in Seitenansicht mit einem aufbauseitigen Ende 100A und einem radträgerseitigen Ende 100B mit einer als Tragfeder wirkenden Hauptfeder 103, die zwischen einem aufbauseitigen Federteller 101 und einem radträgerseitigen Federteller 102 eingespannt ist, sowie einem konzentrisch zur Hauptfeder 103 angeordneten Dämpfer 104, wobei bei diesem Ausführungsbeispiel der Dämpfer 104 und die Hauptfeder 103 derart zueinander angeordnet sind, dass ihre beiden Längsachsen zusammenfallen und eine gemeinsame Federbeinlängsachse L bilden.

Der aufbauseitige Federteller 101 ist dabei in axialer Richtung festgelegt und verdrehfest gegenüber dem Dämpfer 104 angeordnet, während der radträgerseitige Federteller 102 zwar ebenfalls verdrehfest gegenüber dem Dämpfer 104 gelagert ist, jedoch in axialer Richtung verschiebbar und damit verstellbar an einem Dämpferrohr 104A des Dämpfers 104 gelagert ist.

Unterhalb des radträgerseitigen Federtellers 102 ist eine erfindungsgemäße Vorrichtung 10 zur Höhenverstellung vorgesehen, wobei die erfindungsgemäße Vorrichtung 10 einen Stütztopf 12, welcher durch eine Stützringscheibe 12A und ein rohrförmiges Gehäuse 12B gebildet wird, und eine Verstellfeder 11 aufweist, die einen rechteckigen Querschnitt hat und flach gewickelt ist.

Die Stützringscheibe 12A weist auf einer Seite eine Stützfläche 18 auf mit einer ersten Öffnung 12C darin. Die Verstellfeder 11 ist dabei durch die erste Öffnung 12C in der Stützringscheibe 12A derart hindurchgeführt, dass sich ein erster Federabschnitt 11A der Verstellfeder 11 auf einer dem axial verschiebbaren Federteller 102 zugewandten Seite befindet und ein zweiter Federabschnitt 11B auf einer vom axialverschiebbaren Federteller 102 abgewandten Seite der Stützringscheibe 12A, so dass sich die Verstellfeder 11 mit wenigstens der Anfangswindung, in diesem Fall ihrer obersten Windung, auf einer Seite der Stützfläche 18 von der Stützringscheibe 12A befindet und mit wenigstens der Endwindung, in diesem Fall ihrer untersten Windung, auf der von der Stützfläche 18 abgewandten Seite.

Im Bereich des ersten Federabschnittes 11A liegt die Verstellfeder 11 auf Block, wobei sie mit einer von der Stützfläche 18 abgewandten Seite ihrer Anfangswindung, am verstellbaren Federteller 102 abgestützt ist und mit einer der Stützfläche 18 zugewandten Seite einer ihrer federnden Windungen an der Stützfläche 18 der Stützringscheibe 12A.

Die Stützringscheibe 12A bzw. bei diesem Ausführungsbeispiel der gesamte Stütztopf 12 ist dabei drehbar gegenüber dem Dämpfer 104 gelagert und über das rohrförmige Gehäuse 12B und über ein Axiallager 15, welches bei diesem Ausführungsbeispiel Kugeln 15A als Wälzkörper aufweist, an einem verdrehfest und in axialer Richtung festgelegten Lagerteller 16 abgestützt, der mittels eines hülsenförmigen Abschnittes am Dämpfer 104, genauer am Dämpferrohr 104A, befestigt ist.

Der Stütztopf 12 kann mittels eines Aktuators 13 in Form eines Elektromotors 13 über das Schneckengetriebe 14 in eine Drehbewegung versetzt werden und so in Umfangsichtung bewegt werden, wobei der Stütztopf 12 in beide Richtungen gedreht werden kann, das heißt links und rechts herum.

Eine Drehbewegung des Stütztopfes 12 bewirkt, dass die erste Öffnung 12C in der Stützringscheibe 12A in Umfangsrichtung verlagert wird. Dadurch ändert sich die Anzahl der Windungen der Verstellfeder 11, die sich im ersten Federabschnitt 11A befinden und infolgedessen eine Blockhöhe des ersten Federabschnittes 11A.

Nimmt die Anzahl der Windungen der Verstellfeder 11 im ersten Federabschnitt 11A zu und infolgedessen die Blockhöhe des ersten Federabschnittes 11A, wird der axial verschiebbare Federteller 102 nach oben verlagert und die Hauptfeder 103, d.h. die Tragfeder 103, zusammengedrückt, wodurch der Höhenstand der Radaufhängung verringert wird.

Nimmt hingegen die Anzahl der im ersten Federabschnitt 11A auf Block liegenden Windungen der Verstellfeder 11 bzw. die Blockhöhe des ersten Federabschnitts 11A in Folge einer Drehbewegung des Stütztopfes 12 bzw. der Stützringscheibe 12A ab, bewegt sich der axial verschiebbare Federteller 102 aufgrund der Vorspannung in der Hauptfeder 103 nach unten, der Höhenstand nimmt zu.

Fig. 2 zeigt das Federbein 100 aus Fig. 1 in einem Längsschnitt, in welchem gut die einzelnen Komponenten des Federbeins 100 zu erkennen sind, insbesondere die im Inneren des Dämpfers 104 angeordneten Komponenten sowie ein innerer Aufbau der erfindungsgemäßen Vorrichtung 10 zur Höhenverstellung. Fig. 3 zeigt zum besseren Verständnis in vergrößerter Darstellung den oberen Abschnitt des erfindungsgemäßen Federbeins 100 aus Fig. 2, wobei in dieser Darstellung besonders gut die Anordnung der erfindungsgemäßen Vorrichtung 10 am Dämpferrohr 104 unterhalb der Hauptfeder 103 bzw. der Tragfeder 103 zu erkennen ist.

Wie anhand von Fig. 2 und 3 gut zu erkennen ist, ist der aufbauseitige Federteller 101 aus einem Stahlteller 101A mit einer Gummieinlage 101B gebildet und spannt zusammen mit dem radträgerseitigen Federteller 102, welcher ebenfalls einen Stahlteller 102A sowie eine Gummieinlage 102B aufweist, die Hauptfeder 103, welche die Tragfeder bildet, ein. Konzentrisch zur Hauptfeder 103 ist, wie bereits im Zusammenhang mit Fig. 1 erwähnt, der Dämpfer 104 angeordnet, wobei der Dämpfer 104 ein Dämpferrohr 104A, eine Dämpferkolbenstange 104B sowie einen Dämpferkolben 104C aufweist. Ferner ist eine Zusatzfeder 106 vorgesehen, welche bei diesem Ausführungsbeispiel aus einem Gummilagerwerkstoff hergestellt ist. Zur Abdichtung des Federbeins 100, insbesondere zur Abdichtung des Dämpferkolbens 104C im oberen Abschnitt des Federbeins 100 ist ein Faltenbalg 107 vorgesehen, welcher innerhalb der Hauptfeder 103 bzw. der Tragfeder 103 angeordnet ist.

Des Weiteren ist gut die einteilige Ausgestaltung des Stütztopfes 12 mit der den Topfboden bildenden Stützringscheibe 12A sowie dem die Topfwand bildenden, rohrförmigen Gehäuse 12B zu erkennen und wie die Stützringscheibe 12A die Verstellfeder 11 in den ersten Federabschnitt 11A und den zweiten Federabschnitt 11B unterteilt.

Ebenfalls ist gut zu erkennen, dass sich der erste Federabschnitt 11A zwischen der Stützringscheibe 12A sowie dem axial verschiebbaren Federteller 102 auf Block befindet, während der zweite Federabschnitt 11B frei und ohne Vorspannung ist und dass der erste Federabschnitt 11A der Verstellfeder 11 in axialer Richtung zum einen am axial verschiebbaren Federteller 102 abgestützt ist sowie zum anderen auf der Stützfläche 18 der Stützringscheibe 12A, wobei die Verstellfeder 11 dabei nicht unmittelbar, d.h. direkt und ohne ein zusätzliches Bauteil dazwischen, am axial verschiebbaren Federteller 102 abgestützt ist, sondern über einen Hilfsfederteller 25. Hingegen liegt die Verstellfeder 11 mit einer der Stützfläche 18 zugewandten Unterseite einer ihrer federnden Windungen unmittelbar auf der Stützfläche 18 auf.

Des Weiteren ist gut zu erkennen, wie sich das rohrförmige Gehäuse 12B des Stütztopfes 12 bzw. die Topfwand 12B über das Axiallager 15, welches Kugeln 15A als Wälzkörper aufweist, am Lagerteller 16 abstützt, wobei der Lagerteller 16 mittels eines hülsenförmigen Abschnitts am Dämpferrohr 104A verdrehfest und in axialer Richtung festgelegt befestigt ist.

Bei diesem Ausführungsbeispiel einer erfindungsgemäßen Vorrichtung werden die Laufflächen des Axiallagers 15 dabei durch eine Unterseite des rohrförmigen Gehäuses 12B sowie durch eine Oberseite des Lagertellers 16 gebildet, wobei in diesem Fall sowohl der Stütztopf 12 als auch der Lagerteller 16 aus einem entsprechend geeigneten Stahlwerkstoff hergestellt sind. Um ein Herausfallen der Wälzkörper 15A, d.h. der Kugeln 15A, welche ebenfalls aus einem Stahlwerkstoff hergestellt sind, zu verhindern, weisen sowohl das Gehäuse 12B als auch der Lagerteller 16 einen entsprechend ausgestalteten Rand auf.

Eine besonders leichte Vorrichtung kann insbesondere mit einem Stütztopf aus Kunststoff realisiert werden, wobei vorzugsweise dann als Lauffläche ein gestanztes Stahlblech in das Gehäuse 12B eingelegt ist.

Zur Verringerung der Reibung zwischen der Stützringscheibe 12A, insbesondere der Stützfläche 18, und der Verstellfeder 11, welche sich mit einer ihrer federnden Windungen unmittelbar auf der Stützfläche abstützt, sind bei dieser erfindungsgemäßen Vorrichtung 10 in der Stützringscheibe 12A mehrere, in Umfangsrichtung gleichmäßig verteilt angeordnete Wälzkörper 17 vorgesehen, auf welchen die unterste federnde Windung des ersten Federabschnitts 11A aufliegt. Alternativ und/oder zusätzlich kann die Stützfläche 12A auch mit einem Gleitlagerwerkstoff beschichtet sein, oder daraus bestehen. Ebenfalls vorteilhaft ist es, wenn die der Stützfläche 18 zugewandten Oberflächen der Verstellfeder 11, d.h. in diesem Fall die Unterseiten der Verstellfeder 11, wie bei diesem Ausführungsbeispiel, mit einem Gleitlagerwerkstoff beschichtet sind oder daraus bestehen. An ihrer Oberseite hingegen, d.h. an der dem aufbauseitigen Federteller 101 zugewandten Seite, weisen die einzelnen Windungen der Verstellfeder 11 einen besonders hohen Reibwert auf, damit sich die einzelnen Windungen, insbesondere im ersten Federabschnitt 11A, nicht gegeneinander verschieben.

Insbesondere um eine Beschädigung des Dämpferrohrs 104A zu vermeiden sowie um eine Verschiebung des axial verstellbaren Federtellers 102 mit möglichst wenig Reibung zu ermöglichen, weist die erfindungsgemäße Vorrichtung 10 zusätzlich eine Hülse 20 auf, welche mit einem Gleitlagerwerkstoff an ihrer Außenfläche beschichtet ist.

Zur Abdichtung der Vorrichtung 10 zur Höhenverstellung gegen Umwelteinflüsse, insbesondere zur Abdichtung gegen Feuchtigkeit und Schmutz, ist um die Vorrichtung 10 herum ebenfalls ein Faltenbalg 19 angeordnet.

Fig. 4 zeigt einen vergrößerten Ausschnitt des Federbeins aus Fig. 1 in perspektivischer Darstellung mit der erfindungsgemäßen Vorrichtung 10, wobei hier besonders gut der Stütztopf 12 mit der Stützringscheibe 12A mit dem rohrförmigen Gehäuse 12B und der Öffnung 12C in der Stützfläche 18 der Stützringscheibe 12A erkennbar ist sowie die Art und Weise, wie die Verstellfeder 11 durch die Öffnung 12C in der Stützringscheibe 12A hindurchgeführt ist.

Ferner zeigt Fig. 4, wie sich die unterste federnde Windung des ersten Federabschnittes 11A der Verstellfeder 11 auf der Stützfläche 18 mit den gleichmäßig in Umfangsrichtung verteilt angeordneten und in die Stützfläche 18 eingelassenen Wälzkörpern 17 abstützt, wobei die Wälzkörper 17 bei diesem Ausführungsbeispiels als zylindrische Stahlrollen 17 ausgebildet sind.

Aus Fig. 5, welche die Komponenten der erfindungsgemäßen Vorrichtung 10 zur Höhenverstellung in vergrößerter Darstellung im Schnitt zeigt, ist ersichtlich, wie die Verstellfeder 11 im ersten Federabschnitt 11A auf Block liegt und sich an der von der Stützfläche 18 abgewandten Seite der Stützringscheibe 12A mit ihrer Anfangswindung an dem Hilfsfederteller 25 abstützt und mit einer ihrer federnden Windungen auf der Stützfläche 18 insbesondere auf den Wälzkörpern 17. Ferner ist die Anordnung des Hilfsfedertellers 25 außen herum um die zur Reibungsminimierung vorgesehene Hülse 20 erkennbar, an welcher der Hilfsfederteller 25, der zusammen mit dem axial verschiebbaren Federteller 102 in axialer Richtung verlagerbar ist, entlanggleiten kann.

Die Fig. 6a bis 6c zeigen jeweils die Stützringscheibe 12A und die Verstellfeder 11 aus den Fig. 1 bis 5 in perspektivischer, vergrößerter Darstellung in verschiedenen Zuständen, wobei in Fig. 6a die Verstellfeder 11 sowie die Stützringscheibe 12A in einem Zustand gezeigt sind, welcher bei einem in den vorigen Figuren gezeigten erfindungsgemäßen Federbein 100 bewirkt, dass sich ein maximaler Höhenstand einstellt bzw. ein Zustand, in welchem die beiden Federteller 101 und 102, zwischen welchen die Hauptfeder 103 eingespannt ist, weitest möglich auseinanderliegen bzw. beabstandet sind.

Fig. 6b zeigt die Komponenten in einem Zustand für die Einstellung eines mittleren Höhenstandes, wobei zur Verkleinerung des Höhenstandes von einem maximalen Höhenstand auf den mittleren Höhenstand die Stützringscheibe 12A in diesem Fall im Uhrzeigersinn gedreht werden muss, d.h. in Pfeilrichtung. Wird die Stützringscheibe 12A ausgehend von dem in Fig. 6b gezeigten Zustand noch weiter im Uhrzeigersinn bzw. in Pfeilrichtung gedreht, stellt sich nach entsprechender Anzahl von Umdrehungen der Stützringscheibe 12A der in Fig. 6c gezeigten Zustand ein, welcher die Einstellung eines minimalen Höhenstandes bewirkt.

Fig. 7a zeigt ein alternatives Ausführungsbeispiels einer Stützringscheibe 22A in vergrößerter, perspektivischer Einzeldarstellung, wobei diese Stützringscheibe 22A ebenfalls zumindest über einen Teil des Umfangs gleichmäßig in der Stützfläche 28A verteilte angeordnete Wälzkörper 27 aufweist. Die einzelnen Wälzkörper 27 sind dabei jedoch nicht wie bei der der Stützringscheibe 12A aus den Fig. 1 bis 6c durch zylindrische Rollen gebildet, sondern durch kegelförmige Rollen, siehe Fig. 7b.

Ein weiterer Unterschied ist, dass die Wälzkörper 27 bzw. die Rollen 27 dabei jeweils nicht in einer planparallelen Ebene angeordnet sind, welche sich, bezogen auf einen funktionsgemäßen Einbauzustand einer erfindungsgemäßen Vorrichtung in einem Federbein, senkrecht zur Längsachse des Federbeins L erstreckt, sondern die Drehachsen der einzelnen Wälzkörper 27 liegen jeweils auf einer Helix, d.h. die Wälzkörper 27 sind entlang einer schraubenförmigen Bahn über den Umfang verteilt angeordnet, wobei bei dieser Stützringscheibe 22A die Steigung der Helix aus den Drehachsen der Wälzkörpern 27 dabei vorzugsweise der Steigung der Verstellfeder 11 entspricht, die für ein Zusammenwirken mit der Stützringscheibe 22A in einer erfindungsgemäßen Vorrichtung vorgesehen ist. Dadurch kann erreicht werden, dass in einer erfindungsgemäßen Vorrichtung die Verstellfeder 11 außerhalb der Öffnung 22C über eine gesamte Umfangslänge auf der Stützfläche 18 bzw. auf den in der Stützfläche 18 angeordneten Wälzkörpern 27 aufliegt, wodurch die Flächenpressung auf die Stützfläche 18 minimiert werden kann.

Fig. 8 zeigt ein weiteres, alternatives Ausführungsbeispiel einer Stützringscheibe 32A in perspektivischer, vergrößerter Einzelteildarstellung, wobei bei dieser Stützringscheibe 32A keine Wälzkörper in der Stützfläche 38 angeordnet sind, sondern die Stützfläche 38 zur Reibungsminimierung mit einem Gleitlagerwerkstoff beschichtet ist. Aber auch bei dieser Stützringscheibe 32A ist die Stützfläche 38 wie bei der in Fig. 7a dargestellten Stützringscheibe 22A schraubenförmig ausgestaltet und weist die gleiche Steigung auf wie die vorgesehene Verstellfeder 11.

Die Fig. 9a und 9b zeigen jeweils die Stützringscheibe 32A aus Fig. 8 mit einer erfindungsgemäß durch die Öffnung 32C hindurchgeführten Verstellfeder 11, welche durch die Stützringscheibe 32A in einen ersten Federabschnitt 11A und einen zweiten Federabschnitt 11B geteilt ist, wobei Fig. 9a die Komponenten in Ansicht von schräg oben zeigt und Fig. 9b in Ansicht von schräg unten.

Fig. 10 zeigt die Stützringscheibe 32A aus den Fig. 8, 9a und 9b in Verbindung mit einem rohrförmigen Gehäuse 32B, der Hülse 20 sowie der Verstellfeder 11 als Teil eines alternativen Ausführungsbeispiels einer erfindungsgemäßen Vorrichtung 30 zur Höhenverstellung, wobei bei diesem Ausführungsbeispiel die Stützringscheibe 32A und das rohrförmige Gehäuse 32B nicht einstückig ausgebildet sind, wie bei dem zuvor beschriebenen Ausführungsbeispiel einer erfindungsgemäßen Vorrichtung 10, sondern zweiteilig. Dabei stützt sich die Stützringscheibe 32A über eine kugelsegmentförmige Abstützfläche 32D am Gehäuse 32B ab, welches eine entsprechend korrespondierend ausgebildete, jedoch nicht näher bezeichnete Aufnahmefläche zur Aufnahme der Stützringscheibe 32A aufweist. Die kugelsegmentförmig ausgebildete Abstützfläche 32D an der Stützringscheibe 32A ermöglicht in Verbindung mit einem entsprechend ausgebildeten Gehäuse 32B eine Selbstzentrierung der Stützringscheibe 32A relativ zu dem rohrförmigen Gehäuse 32B, wodurch eine besonders gleichmäßige Verteilung der auf die Stützringscheibe 32A und die Verstellfeder 11 während der Höhenverstellung wirkenden Axialkräfte, wodurch wiederum die Verstellkraft gering gehalten werden kann.

Fig. 11 zeigt eine Anordnung von zwei ineinander gewickelten, als Flachbandfedern ausgebildeten Verstellfedern 11 und 21, mit der auf einfache Art und Weise ein Verstellhub einer erfindungsgemäßen Vorrichtung zur Höhenverstellung pro vollständiger Umdrehung einer Stützringscheibe vergrößert werden kann, insbesondere von einem Verstellhub, welcher der Dicke einer Windung der Verstellfeder 11 entspricht auf einen Verstellhub, welcher der Summe aus der Dicke einer Windung der Verstellfeder 11 und der Dicke einer Windung der Verstellfeder 21 entspricht. Bei zwei gleich ausgebildeten Verstellfedern 11 und 21, wie in diesem Fall, kann somit auf einfache Art und Weise eine Verdoppelung des Verstellhubs realisiert werden.

Die beiden Verstellfedern 11 und 21 können dabei entweder gemeinsam durch die Öffnung in der Stützringscheibe hindurchgeführt werden, d.h. übereinander liegend, oder aber jeweils separat, wobei dazu in der Stützringscheibe eine weitere Öffnung vorzusehen ist.

Fig. 12 zeigt ein vorteilhaftes Ausführungsbeispiel einer alternativen, ebenfalls flach gewickelten Verstellfeder 31 mit einem im Wesentlichen rechteckigen Querschnitt. Im Unterschied zu den zuvor beschriebenen Verstellfedern 11 und 21 weist diese Verstellfeder 31 jedoch auf einer Seite einen Vorsprung 31A auf, welcher sich über die gesamte Länge der Verstellfeder 31 erstreckt und eine Art Mittelsteg bildet, und auf der anderen Seite eine korrespondierend ausgebildete Ausnehmung 31B, welche sich ebenfalls über die gesamte Länge der Verstellfeder 31 erstreckt und eine Nut bildet, so dass bei einer Blockbildung der Verstellfeder 31 eine formschlüssige Verbindung, insbesondere in radialer Richtung, zwischen den einzelnen Windungen der Verstellfeder 31 entsteht und infolgedessen eine Relativbewegung der einzelnen Windungen verhindert werden kann. Vorzugsweise kann die Verstellfeder 31 dabei derart in einer erfindungsgemäßen Vorrichtung angeordnet werden, dass sich die Nut 31B jeweils auf der der Stützfläche zugewandten Seite der Verstellfeder 31 befindet und der Vorsprung 31A sich auf der anderem, von der Stützfläche abgewandten Seite.

Fig. 13 zeigt ein weiteres Ausführungsbeispiel einer erfindungsgemäßen Vorrichtung 40 zur Höhenverstellung einer Radaufhängung eines zweispurigen Kraftfahrzeugs, wobei die Vorrichtung 40 in Fig. 13 in einem funktionsgemäßen Einbauzustand in der Radaufhängung in Schnittdarstellung gezeigt ist. Wie bei dem zuvor beschriebenen Federbein 100 ist die Hauptfeder 203 auch bei dieser Radaufhängung zwischen einem aufbauseitigen Federteller 201 und einem radträgerseitigen Federteller 202, welcher ebenfalls in Federlängsrichtung L axial verschiebbar ist, eingespannt, wobei der verschiebbare Federteller 202 ebenfalls mittels der erfindungsgemäßen Vorrichtung 40 in Federlängsrichtung L verlagert werden kann.

Die Hauptfeder 203 ist jedoch in diesem Fall nicht mit einem Dämpfer zu einem Federbein zusammengefasst, sondern unabhängig bzw. separat von einem hier nicht dargestellten Dämpfer angeordnet. Ferner ist die Hauptfeder 203, welche in diesem Fall ebenfalls eine Tragfeder 203 bildet, auch nicht wie bei dem zuvor beschriebenen Federbein 100 zylindrisch ausgebildet, sondern tonnenförmig. Radaufhängungen mit einer eigenständig angeordneten Hauptfeder 203 und einem separat dazu angeordneten Dämpfer, sowohl mit zylindrischen Hauptfedern als auch mit tonnenförmigen Hauptfedern, sind aus dem Stand der Technik grundsätzlich bekannt.

Bei derartigen Radaufhängungen stützt sich die Hauptfeder 203, wie bei der in Fig. 13 ausschnittsweise dargestellten Radaufhängung, üblicherweise ebenfalls über einen aufbauseitigen Federteller 201 am Fahrzeugaufbau 208 ab. Jedoch ist der radträgerseitige Federteller 202 in der Regel nicht am Dämpferrohr abgestützt, sondern an einem der Lenker der Radaufhängung, in diesem Fall am Längslenker 209.

Dementsprechend ist das in Fig. 13 gezeigte Ausführungsbeispiel einer erfindungsgemäßen Vorrichtung 40 zur Höhenverstellung im Unterschied zu den zuvor beschriebenen erfindungsgemäßen Vorrichtungen 10 und 30 nicht zur Befestigung an einem Dämpfer ausgestaltet, insbesondere nicht zur Befestigung an einem Dämpferrohr 104A, sondern für die Befestigung an Komponenten einer Radaufhängung ausgebildet, bei welcher die Hauptfeder 203 und der Dämpfer nicht zu einem Federbein zusammengefasst sind, sondern unabhängig voneinander angeordnet sind.

Wie bei den zuvor beschriebenen erfindungsgemäßen Vorrichtungen 10 und 30 zur Höhenverstellung weist die in Fig. 13 gezeigte, erfindungsgemäße Vorrichtung 40 erfindungsgemäß jedoch auch eine drehbar und in axialer Richtung festgelegte Stützringscheibe 42A mit einer hier nicht näher bezeichneten Öffnung auf, durch welche eine Verstellfeder 11 erfindungsgemäß in der Weise hindurchgeführt ist, dass sich wenigstens ein erster Federabschnitt 11A der Verstellfeder mit einer Anfangswindung auf einer Seite der Stützringscheibe 42A befindet und ein zweiter Federabschnitt 11B mit einer Endwindung auf der anderen Seite.

Wie bei den zuvor beschriebenen erfindungsgemäßen Vorrichtungen 10 und 30 ist die Stützringscheibe 42A auch bei dieser Vorrichtung 40 über ein rohrförmiges Gehäuse 42B und ein Axiallager 45 mit Kugeln 45A als Wälzkörper an einem Lagerteller 46 in axialer Richtung abgestützt. Das Axiallager 45 ist in diesem Fall jedoch durch ein Standard-Wälzlager gebildet, Im Unterschied zu den zuvor beschriebenen, erfindungsgemäßen Vorrichtungen 10 und 30 ist bei dieser erfindungsgemäßen Vorrichtung 40 das rohrförmige Gehäuse 42B ferner nicht außerhalb der Verstellfeder 11 angeordnet, sondern befindet sich innerhalb dieser.

Der Lagerteller 46 ist des Weiteren nicht axial am Dämpferrohr abgestützt, da, wie vorstehend bereits erläutert, die Hauptfeder 203 und der Dämpfer bei dieser Radaufhängung separat voneinander angeordnet sind, sondern der Lagerteller 46 ist am Längslenker 209 befestigt. Dazu weist der Lagerteller 46 eine zylindermantelförmige Lagerteller-Gehäusewand 46A auf, ähnlich dem hülsenförmigen Abschnitt des Lagertellers 16 der vorbeschriebenen Vorrichtung 10, wobei an einem, dem verschiebbaren Federteller 202 zugewandten Ende der Lagerteller-Gehäusewand 46A ein sich in radialer Richtung erstreckender Vorsprung bzw. Flansch vorgesehen ist, mit welchem die Lagerteller-Gehäusewand 46A auf einem Abschnitt des Längslenkers 209 aufliegt. Zusätzlich ist die Lagerteller-Gehäusewand 46A für eine sichere Fixierung, insbesondere zur Herstellung einer drehfesten Verbindung mit dem Längslenker 209, mit diesem mittels mehrerer Schweißverbindungen 210 stoffflüssig verbunden.

Die Stützringscheibe 42A weist ebenfalls eine entsprechend reibungsreduzierte, hier nicht näher bezeichnete Stützfläche auf ihrer, dem verschiebbaren Federteller 202 zugewandten Seite auf, an der die Verstellfeder 11 mit der untersten Windung des ersten Federabschnitts 11A aufliegt. Mit ihrer von der Stützfläche abgewandten Seite der Anfangswindung ist die Verstellfeder 11 direkt am verstellbaren Federteller 202 abgestützt.

Auch bei dieser Vorrichtung 40 ist ein Aktuator 43 vorgesehen, um die Stützringscheibe 42A zu drehen und dadurch die Anzahl der Windungen der Verstellfeder 11 im ersten Federabschnitt 11A und damit die Blockhöhe des ersten Federabschnitts 11A zu verändern und eine gewünschte Höhenverstellung zu bewirken.

Wie anhand der vorgenannten Figuren erläutert worden ist, eignet sich eine erfindungsgemäße Vorrichtung zur Höhenverstellung somit sowohl für die Verwendung in einer Radaufhängung mit einem Federbein als auch für die Verwendung in einer Radaufhängung, bei welcher die Hauptfeder und ein Dämpfer unabhängig voneinander angeordnet sind, d.h. auch für eine Radaufhängung, bei welcher die Hauptfeder separat angeordnet ist und beispielsweise über den radträgerseitigen Federteller an einem Lenker abgestützt ist.

### Bezugszeichenliste:

- 10, 30, 40: erfindungsgemäße Vorrichtung
- 11, 21, 31: Verstellfeder
- 11A: erster Federabschnitt
- 11B: zweiter Federabschnitt
- 12: Stütztopf
- 12A, 22A, 32A, 42A: Stützringscheibe
- 12B, 22B, 32B, 42B: rohrförmiges Gehäuse
- 12C, 22C, 32C: Öffnung in der Stützfläche der Stützringscheibe
- 13,43: Aktuator
- 14: Schneckengetriebe
- 15, 45: Axiallager
- 15A, 45A: Wälzkörper des Axiallagers
- 16, 46: Lagerteller
- 17: Wälzkörper in der Stützringscheibe
- 18, 28, 38: Stützfläche
- 19: Faltenbalg
- 20: Hülse
- 32D: Abstützfläche an der Stützringscheibe
- 25: Hilfsfederteller
- 31A: Vorsprung bzw. Mittelsteg
- 31B: Ausnehmung bzw. Nut
- 46A: Lagerteller-Gehäusewand
- 100: erfindungsgemäßes Federbein
- 100A: aufbauseitiges Federbeinende
- 100B: radträgerseitiges Federbeinende
- 101, 201: aufbauseitiger Federteller
- 101A: Stahlteller
- 101B: Gummieinlage
- 102, 202: radträgerseitiger Federteller
- 102A: Stahlteller
- 102B: Gummieinlage
- 103, 203: Hauptfeder
- 104: Dämpfer
- 104A: Dämpferrohr
- 104B: Dämpferkolbenstange
- 104C: Dämpferkolben
- 105: Stützlager
- 106: Zusatzfeder
- 107: Faltenbalg im Bereich der ersten Schraubenfeder
- 208: Fahrzeugaufbau
- 209: Längslenker
- 210: Schweißverbindung

- L: Federlängsachse

## Patentansprüche

1. Vorrichtung (10, 30, 40) zur Höhenverstellung einer Radaufhängung eines Fahrzeugs, insbesondere zur Höhenverstellung einer Radaufhängung eines zweispurigen Kraftfahrzeugs, wobei die Radaufhängung eine zwischen zwei Federtellern (101, 201) eingespannte Hauptfeder (103, 203) aufweist, wobei wenigstens einer der Federteller (102, 202) in Federlängsrichtung (L) verstellbar ist, und wobei die Vorrichtung (10, 30, 40) zur Verstellung des verstellbaren Federtellers (102, 202) in Federlängsrichtung (L) ausgebildet ist, wobei die Vorrichtung (10, 30, 40) eine Stützringscheibe (12A, 22A, 32A, 42A) und wenigstens eine als Schraubenfeder ausgebildete Verstellfeder (11, 21, 31) mit einer Anfangswindung, einer Endwindung und wenigstens einer mittleren Windung dazwischen aufweist und die Stützringscheibe (12A, 22A, 32A, 42A) auf einer Seite eine Stützfläche (18, 28, 38) aufweist mit wenigstens einer Öffnung in der Stützfläche (18, 28, 38), und wobei die Verstellfeder (11, 21, 31) derart durch die Öffnung (12C, 22C, 32C) in der Stützringscheibe (12A, 22A, 32A, 42A) hindurchgeführt ist, dass sich ein erster Federabschnitt (11A) der Verstellfeder (11, 21, 31) mit wenigstens der Anfangswindung auf einer Seite der Stützfläche (18, 28, 38) von der Stützringscheibe (12A, 22A, 32A, 42A) befindet und ein zweiter Federabschnitt (11B) der Verstellfeder (11, 21, 31) mit wenigstens der Endwindung auf der von der Stützfläche (18, 28, 38) abgewandten Seite und die Stützringscheibe (12A, 22A, 32A, 42A) auf einer, bezogen auf einen funktionsgemäßen Einbauzustand der Vorrichtung (10, 30, 40) in einer Radaufhängung eines Fahrzeugs, von der Hauptfeder (103, 203) abgewandten Seite des verstellbaren Federtellers (102, 202) drehbar und in axialer Richtung fest lagerbar ist und sich die Verstellfeder (11, 21, 31) mit einer der Stützfläche (18, 28, 38) zugewandten Seite der Anfangswindung oder einer der mittleren Windungen zumindest teilweise an der Stützfläche (18, 28, 38) der Stützringscheibe (12A, 22A, 32A, 42A) abstützt, **dadurch gekennzeichnet, dass** die Vorrichtung (10, 30, 40) ein auf der von der Stützfläche (18, 28, 38) abgewandten Seite der Stützringscheibe (12A, 22A, 32A, 42A) angeordnetes Axiallager (15, 45) aufweist, wobei die Stützringscheibe (12A, 22A, 32A, 42A) vorzugsweise über das Axiallager (15, 25) in axialer Richtung abstützbar ist.

2. Vorrichtung (10, 30, 40) nach Anspruch 1, **dadurch gekennzeichnet, dass** die Vorrichtung (10, 30, 40) derart ausgebildet und in einer Radaufhängung anordbar ist, dass sich in einem funktionsgemäßen Einbauzustand der Vorrichtung (10, 30, 40) in einer Radaufhängung die Verstellfeder (11, 21, 31) mit einer von der Stützfläche (18, 28, 38) abgewandten Seite der Anfangswindung auf der von der Hauptfeder (103, 203) abgewandten Seite des verstellbaren Federtellers (102, 202) in Federlängsrichtung (L) am verstellbaren Federteller (102, 202) abstützt.

3. Vorrichtung (10, 30, 40) nach Anspruch 1 oder 2, **dadurch gekennzeichnet, dass** die Verstellfeder (11, 21, 31) einen im Wesentlichen rechteckigen oder einen rechteckigen Querschnitt aufweist und vorzugsweise flachgewickelt ist.

4. Vorrichtung (10, 30, 40) nach wenigstens einem der vorgenannten Ansprüche, **dadurch gekennzeichnet, dass** die Vorrichtung (10, 30, 40) einen auf der von der Stützfläche (18, 28, 38) abgewandten Seite der Stützringscheibe (12A, 22A, 32A, 42A) angeordneten Lagerteller (16, 46) zur Aufnahme des Axiallagers (15, 45) aufweist, wobei der Lagerteller (16, 46) vorzugsweise axial festlegbar und insbesondere drehfest befestigbar ist.

5. Vorrichtung (10, 30, 40) nach wenigstens einem der vorgenannten Ansprüche, **dadurch gekennzeichnet, dass** die Vorrichtung (10, 30, 40) in einem Bereich des zweiten Federabschnitts (11B), ein sich in axialer Richtung erstreckendes, rohrförmiges Gehäuse (12B, 32B, 42B) aufweist, über welches sich die Stützringscheibe (12A, 22A, 32A) vorzugsweise am Axiallager (15) abstützt, wobei insbesondere die Stützringscheibe (32A, 42A) und das Gehäuse (32B, 42B) als separate Bauteile ausgebildet sind und die Stützringscheibe (22A, 32A, 42A) zur Abstützung am Gehäuse eine Abstützfläche (32D) aufweist, wobei die Abstützfläche (32D) der Stützringscheibe (32A) vorzugsweise eine kugelsegmentförmige Kontur aufweist, und wobei das Gehäuse (32B) insbesondere eine zur kugelsegmentförmigen Kontur der Abstützfläche (32D) der Stützringscheibe (32A) korrespondierend ausgestaltete Aufnahmefläche zur Aufnahme der Stützringscheibe (32A) aufweist.

6. Vorrichtung (10, 30) nach wenigstens einem der vorgenannten Ansprüche, **dadurch gekennzeichnet, dass** wenigstens eine der Laufflächen des Axiallagers (15) durch die Stützringscheibe und/oder das Gehäuse (12B, 32B) oder den Lagerteller (16) gebildet ist.

7. Vorrichtung nach wenigstens einem der vorgenannten Ansprüche, **dadurch gekennzeichnet, dass** die Vorrichtung wenigstens eine weitere Verstellfeder (21) aufweist, wobei vorzugsweise wenigstens eine der weiteren Verstellfedern (21) einen rechteckigen oder im Wesentlichen rechteckigen Querschnitt aufweist und insbesondere flachgewickelt ist.

8. Vorrichtung nach Anspruch 7, **dadurch gekennzeichnet, dass** die Stützringscheibe eine erste Öffnung und wenigstens eine weitere Öffnung aufweist, wobei eine Verstellfeder (11) durch die erste Öffnung in der Stützringscheibe hindurchgeführt ist und wenigstens eine der weiteren Verstellfedern (21) durch wenigstens eine der weiteren Öffnungen, wobei vorzugsweise durch eine Öffnung jeweils nur eine Verstellfeder (11, 21) hindurchgeführt ist.

9. Vorrichtung (10, 30, 40) nach wenigstens einem der vorgenannten Ansprüche, **dadurch gekennzeichnet, dass** eine, bezogen auf einen funktionsgemäßen Einbauzustand der Vorrichtung (10, 30, 40) in einer Radaufhängung, dem verstellbaren Federteller (102, 202) zugewandte Oberfläche wenigstens einer Verstellfeder (11, 21, 31) zumindest teilweise einen derart hohen Reibwert aufweist, dass eine Relativbewegung zwischen den einzelnen Windungen, insbesondere in radialer Richtung, verhindert wird.

10. Vorrichtung nach wenigstens einem der vorgenannten Ansprüche, **dadurch gekennzeichnet, dass** an wenigstens einer der Windungen wenigstens einer Verstellfeder (31), vorzugsweise an wenigstens einer der federnden Windungen, ein Vorsprung (31A) angeordnet ist und an wenigstens einer der benachbarten Windungen eine Ausnehmung (31B), wobei der Vorsprung (31A) mit der Ausnehmung (31B) bei Blockbildung derart zusammenwirkt, dass eine Relativbewegung zwischen den einzelnen Windungen verhindert wird, insbesondere in radialer Richtung, wobei vorzugsweise der Vorsprung (31A), bezogen auf einen funktionsgemäßen Einbauzustand der Vorrichtung (10, 30) in einer Radaufhängung, auf der dem verstellbaren Federteller zugewandten Seite der Windung angeordnet ist und die Ausnehmung (31B) auf der vom verstellbaren Federteller abgewandten Seite.

11. Vorrichtung (10, 30, 40) nach wenigstens einem der vorgenannten Ansprüche, **dadurch gekennzeichnet, dass** die Stützfläche (18, 28, 38) und/oder, bezogen auf einen funktionsgemäßen Einbauzustand der Vorrichtung (10, 30, 40) in einer Radaufhängung, eine der vom verstellbaren Federteller (102, 202) abgewandte Oberfläche wenigstens einer Verstellfeder (11, 21, 31) zumindest teilweise mit einem Gleitlagerwerkstoff beschichtet ist oder daraus besteht.

12. Vorrichtung (10, 30, 40) nach wenigstens einem der vorgenannten Ansprüche, **dadurch gekennzeichnet, dass** in der Stützringscheibe (12A, 22A), vorzugsweise in der Stützfläche (18, 28), insbesondere in Umfangsrichtung gleichmäßig verteilt, mehrere Wälzkörper (17, 27) angeordnet sind, wobei vorzugsweise wenigstens einer der Wälzkörper (27) kegelförmig ausgebildet ist, insbesondere alle, und/oder die Stützfläche (28, 38) helixförmig ausgebildet ist, vorzugsweise mit einer Steigung, die der Steigung der Verstellfeder (11, 21, 31) entspricht..

## Claims

1. A device (10, 30, 40) for height adjustment of a wheel suspension of a vehicle, in particular for height adjustment of a wheel suspension of a two-track motor vehicle, wherein the wheel suspension comprises a main spring (103, 203) fixed between two spring plates (101, 201), wherein at least one of the spring plates (102, 202) is adjustable in the longitudinal direction (L) of the spring, and wherein the device (10, 30, 40) is designed to adjust the adjustable spring plate (102, 202) in the longitudinal direction (L) of the spring, wherein the device (10, 30, 40) has a support ring disc (12A, 22A, 32A, 42A) and at least one adjustment spring (11, 21, 31) formed as a coil spring, having an initial coil, an end coil and at least one middle coil therebetween, and the support ring disc (12A, 22A, 32A, 42A) has a support surface (18, 28, 38) on one side with at least one opening in the support surface (18, 28, 38), and wherein the adjustment spring (11, 21, 31) is guided through the opening (12C, 22C, 32C) in the support ring disc (12A, 22A, 32A, 42A) in such a way that a first spring portion (11A) of the adjustment spring (11, 21, 31) is situated with at least the initial coil on one side of the support surface (18, 28, 38) of the support ring disc (12A, 22A, 32A, 42A), and a second spring portion (11B) of the adjustment spring (11, 21, 31) is situated with at least the end coil on the side facing away from the support surface (18, 28, 38), and the support ring disc (12A, 22A, 32A, 42A), based on a functional, installed position of the device (10, 30, 40) in a wheel suspension of a vehicle, can be mounted rotatably on a side of the adjustable spring plate (102, 202) facing away from the main spring (103, 203) and fixedly in the axial direction, and the adjustment spring (11, 21, 31) is supported with a side of the initial coil facing the support surface (18, 28, 38) or with one of the middle windings at least partially on the support surface (18, 28, 38) of the support ring disc (12A, 22A, 32A, 42A), **characterised in that** the device (10, 30, 40) has an axial bearing (15, 45) arranged on the side of the support ring disc (12A, 22A, 32A, 42A) facing away from the support surface (18, 28, 38), wherein the support ring disc (12A, 22A, 32A, 42A) preferably can be supported in the axial direction via the axial bearing (15, 25).

2. A device (10, 30, 40) according to claim 1, **characterised in that** the device (10, 30, 40) is formed in such a way and is arrangeable in a wheel suspension in such a way that, in a functional, installed position of the device (10, 30, 40) in a wheel suspension, the adjustment spring (11, 21, 31) is supported on the adjustable spring plate (102, 202) in the longitudinal direction (L) of the spring via a side of the initial coil facing away from the support surface (18, 28, 38) on the side of the adjustable spring plate (102, 202) facing away from the main spring (103, 203).

3. A device (10, 30, 40) according to claim 1 or 2, **characterised in that** the adjustment spring (11, 21, 31) has a substantially rectangular or rectangular cross-section and is preferably wound flat.

4. A device (10, 30, 40) according to at least one of the preceding claims, **characterised in that** the device (10, 30, 40) has a bearing plate (16, 46), arranged on the side of the support ring disc (12A, 22A, 32A, 42A) facing away from the support surface (18, 28, 38), for receiving the axial bearing (15, 45), wherein the bearing plate (16, 46) is preferably axially fixable and especially is fastenable non-rotatably.

5. A device (10, 30, 40) according to at least one of the preceding claims, **characterised in that** the device (10, 30, 40), in a region of the second spring portion (11B), has a tubular housing (12B, 32B, 42B) extending in the axial direction, via which the support ring disc (12A, 22A, 32A) is supported preferably on the axial bearing (15), wherein especially the support ring disc (32A, 42A) and the housing (32B, 42B) are formed as separate components and the support ring disc (22A, 32A, 42A) has a supporting surface (32D) for support on the housing, wherein the supporting surface (32D) of the support ring disc (32A) preferably has a spherical-segment-shaped contour, and wherein the housing (32B) especially has a receiving surface, designed in a manner corresponding to the spherical-segment-shaped contour of the supporting surface (32D) of the support ring disc (32A), in order to receive the support ring disc (32A).

6. A device (10, 30) according to at least one of the preceding claims, **characterised in that** at least one of the running surfaces of the axial bearing (15) is formed by the support ring disc and/or the housing (12B, 32B) or the bearing plate (16).

7. A device according to at least one of the preceding claims, **characterised in that** the device has at least one further adjustment spring (21), wherein preferably at least one of the further adjustment springs (21) has a rectangular or substantially rectangular cross-section, and especially is wound flat.

8. A device according to claim 7, **characterised in that** the support ring disc has a first opening and at least one further opening, wherein an adjustment spring (11) is guided through the first opening in the support ring disc and at least one of the further adjustment springs (21) is guided through at least one of the further openings, wherein in each case preferably only one adjustment spring (11, 21) is guided through an opening.

9. A device (10, 30, 40) according to at least one of the preceding claims, **characterised in that**, based on a functional, installed position of the device (10, 30, 40) in a wheel suspension, a surface of at least one adjustment spring (11, 21, 31) facing the adjustable spring plate (102, 202) has such a high friction value, at least in part, that a relative movement between the individual coils, especially in the radial direction, is prevented.

10. A device according to at least one of the preceding claims, **characterised in that** at least one adjustment spring (31) is arranged on at least one of the coils, a protrusion (31A) is arranged preferably on at least one of the resilient coils, and a recess (31B) is arranged on at least one of the adjacent coils, wherein the protrusion (31A) cooperates with the recess (31B) to form a block, in such a way that a relative movement between the individual coils, especially in the radial direction, is prevented, wherein preferably the protrusion (31A), based on a functional, installed position of the device (10, 30) in a wheel suspension, is arranged on the side of the coil facing the adjustable spring plate, and the recess (31B) is arranged on the side facing away from the adjustable spring plate.

11. A device (10, 30, 40) according to at least one of the preceding claims, **characterised in that** the support surface (18, 28, 38) and/or, based on a functional, installed position of the device (10, 30, 40) in a wheel suspension, a surface of at least one adjustment spring (11, 21, 31) facing away from the adjustable spring plate (102, 202) is at least partially coated with a plain bearing material or consists of the same.

12. A device (10, 30, 40) according to at least one of the preceding claims, **characterised in that** a plurality of rolling elements (17, 27) are arranged in the support ring disc (12A, 22A), preferably in the support surface (18, 28), especially distributed uniformly in the circumferential direction, wherein preferably at least one of the rolling elements (27) is conical, especially all, and/or the support surface (28, 38) is helical, preferably with a pitch corresponding to the pitch of the adjustment spring (11, 21, 31).

## Revendications

1. Dispositif (10, 30, 40) permettant le réglage en hauteur d'une suspension de roue d'un véhicule, en particulier le réglage en hauteur d'une suspension de roue d'un véhicule automobile à deux lignes de roues, cette suspension de roue comportant un ressort principal (103, 203) encastré entre deux coupelles de ressort (101, 201), au moins l'une des coupelles de ressort (102, 202) étant réglable dans la direction longitudinale (L) du ressort, et le dispositif (10, 30, 40) étant réalisé pour permettre de régler la coupelle de ressort réglable (102, 202) dans la direction longitudinale (L) du ressort, ce dispositif (10, 30, 40) comprenant une rondelle annulaire d'appui (12A, 22A, 32A, 42A) et au moins un ressort de réglage (11, 21, 31) réalisé sous la forme d'un ressort hélicoïdal ayant un enroulement de départ, un enroulement terminal et au moins un enroulement médian situé entre ces enroulements, la rondelle annulaire d'appui (12A, 22A, 32A, 42A) comportant sur un côté une surface d'appui (18, 28, 38) ayant au moins une ouverture, le ressort de réglage (11, 21, 31) passant au travers de l'ouverture (12C, 22C, 32C) de la rondelle annulaire d'appui (12A, 22A, 32A, 42A) de sorte qu'un premier segment (11A) de ce ressort de réglage (11 21, 31) comportant au moins l'enroulement de départ soit situé sur un côté de la surface d'appui (18, 28, 38) de la rondelle annulaire d'appui (12A, 22A, 32A, 42A) et qu'un second segment (11B) du ressort de réglage (11, 21, 31) comportant au moins l'enroulement terminal soit situé sur le côté opposé à la surface d'appui (18, 28, 38), la rondelle annulaire d'appui (12A, 22A, 32A, 42A) étant mobile en rotation, et pouvant être fixée solidairement dans la direction axiale, sur le côté de la coupelle de ressort réglable (102, 202) situé à l'opposé du ressort principal (103, 203), dans l'état de montage fonctionnel du dispositif (10, 30, 40) dans une suspension de roue d'un véhicule, et le ressort de réglage (11, 21, 31) s'appuyant par le côté de l'enroulement de départ tourné vers la surface d'appui (18, 28, 38) ou l'un des enroulement médian au moins partiellement sur la surface d'appui (18, 28, 38) de la rondelle annulaire d'appui (12A, 22A, 32A, 42A),
**caractérisé en ce que**
le dispositif (10, 30, 40) comporte, un palier axial (15, 45) installé sur le côté de la rondelle annulaire d'appui (12A, 22A, 32A, 42A) situé à l'opposé de la surface d'appui (18, 28, 38), la rondelle annulaire d'appui (12A, 22A, 32A, 42A) pouvant de préférence s'appuyer en direction axiale sur le palier axial (15, 25).

2. Dispositif (10, 30, 40) conforme à la revendication 1,
**caractérisé en ce qu'**
il est réalisé et peut être installé dans une suspension de roue de sorte que, dans son état de montage fonctionnel dans une suspension de roue, le ressort de réglage (11, 21 31) s'appuie sur la coupelle de ressort réglable (102, 202) par le côté de l'enroulement de départ situé à l'opposé de la surface d'appui (18, 28, 38) sur le côté situé à l'opposé du ressort principal (103, 203) de la coupelle de ressort réglable (102, 202) dans la direction longitudinale (L) du ressort.

3. Dispositif (10, 30, 40) conforme à la revendication 1 ou 2,
**caractérisé en ce que**
le ressort de réglage (11, 21, 31) a une section essentiellement rectangulaire ou rectangulaire et est de préférence à spires jointives.

4. Dispositif (10, 30, 40) conforme à au moins l'une des revendications précédentes,
**caractérisé en ce qu'**
il comporte une coupelle de palier (16, 46) installée sur le côté de la rondelle annulaire d'appui (12A, 22A, 32A, 42A) situé à l'opposé de la surface d'appui (18, 28, 38) destinée à recevoir le palier axial (15, 45), la coupelle de palier (16, 46) pouvant de préférence être fixée axialement et en particulier en rotation.

5. Dispositif (10, 30, 40) conforme à au moins l'une des revendications précédentes,
**caractérisé en ce qu'**
il comporte dans la zone du second segment de ressort (11B), un boîtier tubulaire (12B, 32B, 42B) s'étendant en direction axiale par l'intermédiaire duquel s'appuie la rondelle annulaire d'appui (12A, 22A, 32A) de préférence sur le palier axial (15), et en particulier, la rondelle annulaire d'appui (32A, 42A) et le boîtier (32B, 42B) sont réalisés sous la forme de composants distincts, et la rondelle annulaire d'appui (22A, 32A, 42A) comporte une surface d'appui (32D) permettant son appui sur le boîtier, la surface d'appui (32D) de la rondelle annulaire d'appui (32A) ayant de préférence un contour en forme de segment de sphère, et le boîtier (32B) ayant en particulier une surface de réception réalisée en conformité avec le contour en forme de segment de sphère de la surface d'appui (32D) de la rondelle annulaire d'appui (32A) pour recevoir la rondelle annulaire d'appui (32A).

6. Dispositif (10, 30) conforme à au moins l'une des revendications précédentes,
**caractérisé en ce qu'**
au moins l'une des surfaces de roulement du palier axial (15) est formée par la rondelle annulaire d'appui et/ou le boîtier (12B, 32B) ou la coupelle de palier (16).

7. Dispositif conforme à au moins l'une des revendications précédentes,
**caractérisé en ce qu'**
il comporte au moins un autre ressort de réglage (21) et de préférence au moins l'un des autres ressorts de réglage (21) a une section rectangulaire ou essentiellement rectangulaire et est en particulier à spires jointives.

8. Dispositif conforme à la revendication 7,
**caractérisé en ce que**
la rondelle annulaire d'appui comporte une première ouverture et au moins une autre ouverture, le ressort de réglage (11) passant au travers de la première ouverture de la rondelle annulaire d'appui, et au moins l'un des autres ressorts de réglage (21) passant au travers d'au moins l'une des autres ouvertures, et de préférence un seul ressort de réglage (11, 21) passe au travers d'une ouverture respective.

9. Dispositif (10, 30, 40) conforme à au moins l'une des revendications principales,
**caractérisé en ce que**
la surface d'au moins un ressort de réglage (11, 21, 31) tournée vers la coupelle de ressort réglable (102, 202) dans l'état de montage fonctionnel du dispositif (10, 30, 40) dans une suspension de roue, présente au moins partiellement un coefficient de friction élevé permettant d'empêcher un mouvement relatif entre les différents enroulements, en particulier en direction radiale.

10. Dispositif conforme à au moins l'une des revendications précédentes,
**caractérisé en ce que**
sur au moins l'un des enroulements d'au moins un ressort de réglage (31) de préférence sur au moins l'un des enroulements élastiques est installée une saillie (31A) et sur au moins l'un des enroulements voisins est installé un évidement (31B), la saillie (31A) coopérant avec l'évidement (31B) en formant un bloc de façon à empêcher un mouvement relatif entre les différents enroulements, en particulier en direction radiale, et de préférence la saillie (31A) est installée, dans l'état de montage fonctionnel du dispositif (10, 30) dans une suspension de roue, sur le côté de l'enroulement tourné vers la coupelle de ressort réglable et l'évidement (31B) est installé sur le côté opposé à la coupelle de ressort réglable.

11. Dispositif (10, 30, 40) conforme à au moins l'une des revendications précédentes,
**caractérisé en ce que**
la surface d'appui (18, 28, 38) et/ou dans l'état de montage fonctionnel du dispositif (10, 30, 40) dans une suspension de roue, la surface située à l'opposé de la coupelle de ressort réglable (102, 202) d'au moins un ressort de réglage (11, 21, 31) est(sont) recouverte(s) au moins partiellement d'un matériau de roulement ou est(sont) réalisée(s) en un tel matériau.

12. Dispositif (10, 30, 40) conforme à au moins l'une des revendications précédentes,
**caractérisé en ce que**
plusieurs corps de roulement (17, 27) sont installés dans la rondelle annulaire d'appui (12A, 22A), de préférence dans la surface d'appui (18, 28) en étant uniformément répartis en particulier dans la direction périphérique, et de préférence au moins l'un des corps de roulement (27) et en particulier tous les corps de roulement est(sont) réalisé(s) en forme de cône, et/ou la surface d'appui (28, 38) est réalisée en forme d'hélice de préférence avec une pente qui correspond à la pente du ressort de réglage (11, 21, 31).
